(19) Europäisches Patentamt
European Patent Office
Office européen des brevets

(11) EP 4 424 732 A1

(12) # EUROPEAN PATENT APPLICATION
published in accordance with Art. 153(4) EPC

(43) Date of publication:
**04.09.2024 Bulletin 2024/36**

(21) Application number: **22886064.9**

(22) Date of filing: **27.10.2022**

(51) International Patent Classification (IPC):
***C08F 230/02*** *(2006.01)* ***C08F 220/56*** *(2006.01)*
***C09K 8/035*** *(2006.01)*

(52) Cooperative Patent Classification (CPC):
**C07F 9/38; C08F 220/56; C08F 230/02; C09K 8/035**

(86) International application number:
**PCT/CN2022/127923**

(87) International publication number:
**WO 2023/072189 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.10.2021 CN 202111278542**
**30.10.2021 CN 202111278543**
**30.10.2021 CN 202111278544**

(71) Applicants:
- **China Petroleum & Chemical Corporation Beijing 100728 (CN)**
- **Sinopec Dalian Research Institute of Petroleum and Petrochemicals Co., Ltd. Lushunkou District Dalian, Liaoning 116045 (CN)**

(72) Inventors:
- **SUN, Zhenfeng Dalian, Liaoning 116045 (CN)**
- **ZHAO, Kaiqiang Dalian, Liaoning 116045 (CN)**
- **YANG, Chao Dalian, Liaoning 116045 (CN)**
- **WANG, Chen Dalian, Liaoning 116045 (CN)**
- **LI, Jie Dalian, Liaoning 116045 (CN)**

(74) Representative: **karo IP**
**karo IP Patentanwälte Kahlhöfer Rößler Kreuels PartG mbB Postfach 32 01 02 40416 Düsseldorf (DE)**

(54) **POLYMERIZABLE PHOSPHONIC ACID (SALT) AND PREPARATION METHOD THEREFOR, COPOLYMER AND DRILLING FLUID**

(57) The present invention relates to a polymerizable phosphonate monomer and a preparation method therefor, a copolymer prepared and obtained from the polymerizable phosphonate monomer and a drilling fluid that uses the copolymer. The anion of the polymerizable phosphonic acid (salt) has a structure that is represented in the following formula (1), and the cation is at least one among hydrogen, a monovalent metal cation, a divalent metal cation, a trivalent metal cation, and a tetravalent metal cation. In addition, $^1H$ NMR of the polymerizable phosphonic acid (salt) substantivelysubstantively has no peak at the chemical shift $\delta$ of 1.019. The preparation method for a polymerizable phosphonic acid (salt) monomer as provided in the present invention uses an organic solvent as the solvent of a reaction system, so that compared to a water solvent system, reaction efficiency is higher, less by-products are produced, and the separation of the obtained products is simpler. Moreover, the obtained product has higher purity, and thus a copolymer having higher molecular weight may be obtained, and the temperature and salt resistance of the drilling fluid can be improved.

EP 4 424 732 A1

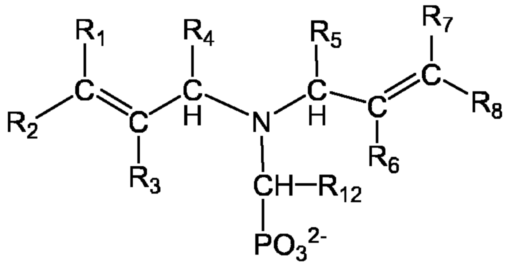

Formula (1).

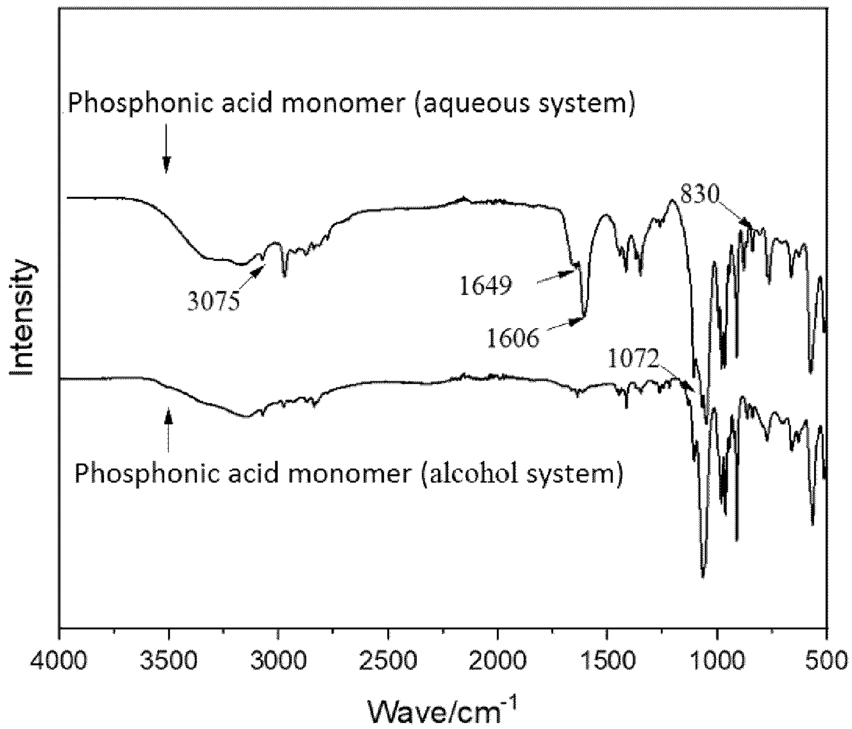


FIG. 1

## Description

### Cross Reference to Related Applications

This application claims the benefits of Chinese patent applications 202111278542.1, 202111278543.6, and 202111278544.0, filed on October 30, 2021, the contents of which are incorporated herein by reference.

### FIELD

The present disclosure relates to a polymerizable phosphonic acid salt monomer and a preparation method therefor, a copolymer prepared from the polymerizable phosphonic acid salt monomer and a drilling fluid using the copolymer.

### BACKGROUND

At present, synthetic polymers commonly used in drilling fluids mainly include anionic polymers, cationic polymers and zwitterionic polymers. The anionic polymers and the zwitterionic polymers are mostly used as fluid loss additives, and the cationic polymers are mainly used as shale inhibitors. Common zwitterionic polymers are commercially available fluid loss additives for drilling fluids LS-1, JT888, FA-367, XY-27, and the like which are synthesized from AM, AMPS, and DMDAAC as raw materials.

CN108753267A discloses an ultra-high temperature-resistant anionic polymer fluid loss additive for drilling fluid and completion fluid and a preparation method thereof. The ultra-high temperature resistant anionic polymer fluid loss additive is a terpolymer prepared by an aqueous solution polymerization reaction by using acrylamide, 2-acrylamido-2-methylpropanesulfonic acid and dimethylaminoethyl methacrylate as polymerization monomers. The polymer has outstanding fluid loss reduction properties at a high temperature, but the salt resistance effect is general. CN104388061A discloses a high-temperature-resistant salt-resistant polymer fluid loss additive for water-based drilling fluid and a preparation method thereof, wherein the fluid loss additive is a tetrapolymer synthesized by copolymerizing monomers such as N-vinyl caprolactam, 2-acrylamido-2-methylpropanesulfonic acid, acrylic acid, and N,N-dimethylacrylamide. The fluid loss additive can effectively improve the temperature resistance, salt resistance, and viscosity retention rate after high temperature aging of a drilling fluid system. However, the fluid loss reduction ability is limited by the change in the physicochemical properties of subcritical water in high temperature and high pressure environments.

Currently, in view of the characteristics of high formation temperature and high mineralization during oilfield drilling, in order to achieve the effects of wellbore stability and safe drilling during drilling, polymers for drilling must have higher fluid loss reduction ability, temperature resistance, salt resistance and shear resistance.

### SUMMARY

In view of the above problems existing in the prior art, an object of the present disclosure is to provide a polymerizable phosphonic acid (salt) monomer and a preparation method therefor, a copolymer prepared from the polymerizable phosphonic acid salt monomer and a drilling fluid using the copolymer. The method for preparing the polymerizable phosphonic acid (salt) monomer provided by the present disclosure uses an organic solvent as a solvent of a reaction system, so that compared with a water solvent system, the reaction efficiency is higher, less by-products are produced, and the separation of the obtained products is simpler, clear separation of the product can be achieved only by the conventional separation means such as filtration or centrifugal separation, and the obtained product has higher purity, and thus a copolymer having a higher molecular weight can be obtained, and higher temperature and salt resistance of the drilling fluid can be achieved by fewer monomers.

In order to achieve the above object, according to a first aspect of the present disclosure, provided is a polymerizable phosphonic acid (salt), wherein an anion of the polymerizable phosphonic acid (salt) has a structure represented by the following formula (1), a cation of the polymerizable phosphonic acid (salt) is at least one of hydrogen, a monovalent metal cation, a divalent metal cation, a trivalent metal cation, and a tetravalent metal cation, and $^1$H NMR of the polymerizable phosphonic acid (salt) substantively has no peak at a chemical shift $\delta$ of 1.019.

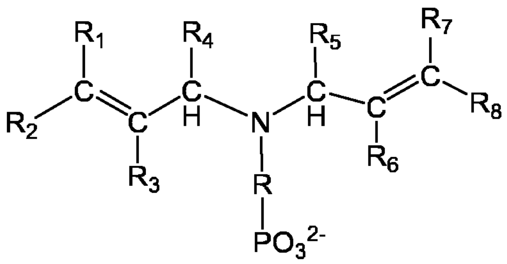

Formula (1),

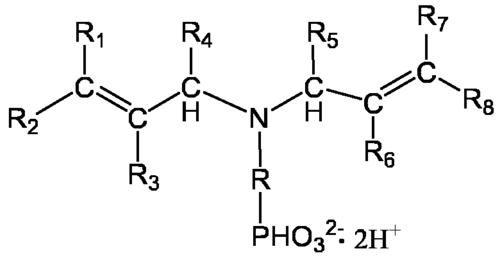

Formula (2),

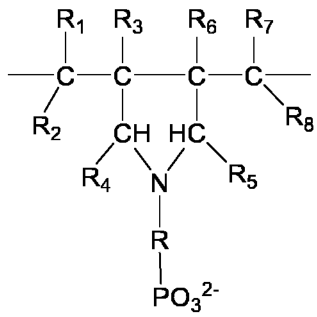

Formula (I),

wherein $R_1$, $R_2$, $R_3$, $R_4$, $R_5$, $R_6$, $R_7$ and $R_8$ are each independently hydrogen or C1-C10 linear or branched alkyl; preferably hydrogen or C 1-C4 linear or branched alkyl; and more preferably hydrogen, methyl or ethyl.

According to a second aspect of the present disclosure, provided is a method for preparing a polymerizable phosphonic acid, wherein the polymerizable phosphonic acid has a structure represented by a formula (2), and the method includes reacting phosphorous acid sequentially with an amine represented by a formula (3) and an aldehyde in an organic solvent under reaction conditions,

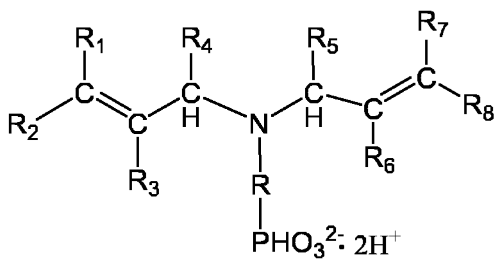

Formula (2),

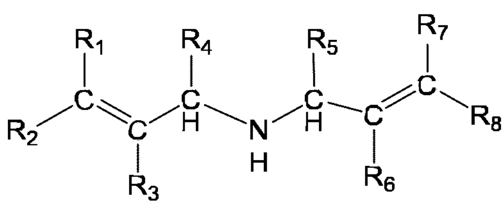

Formula (3),

wherein $R_1$, $R_2$, $R_3$, $R_4$, $R_5$, $R_6$, $R_7$ and $R_8$ are each independently hydrogen or C1-C10 linear or branched alkyl; preferably

hydrogen or C 1-C4 linear or branched alkyl; and more preferably hydrogen, methyl or ethyl.

According to a third aspect of the present disclosure, provided is a method for preparing a polymerizable phosphonic acid salt, including: preparing a polymerizable phosphonic acid by the method described above without the step of separation and purification, and directly adding an alkaline substance for a neutralization reaction.

According to a fourth aspect of the present disclosure, provided is a polymerizable phosphonic acid salt prepared by the method described above.

According to a fifth aspect of the present disclosure, provided is use of the polymerizable phosphonic acid (salt) described above, and the polymerizable phosphonic acid salt prepared by the above method in oilfield chemicals, water treatment, paper industry, fiber industry, coating industry, water absorbing materials, printing and dyeing auxiliaries, and biomedicine.

According to a sixth aspect of the present disclosure, provided is a phosphonate radical-containing copolymer, including a structural unit A and a structural unit B; wherein the structural unit A is from the polymerizable phosphonic acid (salt) described above; the structural unit B is an acrylamide-based structural unit; a mass ratio of the structural unit A to the structural unit B is 1:3-3: 1; and the copolymer has a weight average molecular weight of $2.5\times10^5$-$1\times10^7$.

According to a seventh aspect of the present disclosure, provided is a drilling fluid containing the copolymer described above.

Through the above technical solutions, the polymerizable phosphonic acid (salt) and the preparation method therefor, the copolymer and the drilling fluid provided by the present disclosure can obtain the following beneficial effects:

1) the method for preparing the polymerizable phosphonic acid (salt) monomer provided by the present disclosure uses the organic solvent as the solvent of the reaction system, so that compared with a water solvent system, the reaction efficiency is higher, less by-products are produced, and the separation of the obtained products is simpler, clear separation of the product can be achieved only by the conventional separation means such as filtration or centrifugal separation, and the obtained product has higher purity, and thus a copolymer having a higher molecular weight can be obtained, and only a bipolymer obtained in combination with acrylamide is required to greatly increase the temperature and salt resistance and corrosion and scale inhibition of the drilling fluid.

2) The copolymer according to the present disclosure, when used as a fluid loss additive, still has a good fluid loss reducion effect under the high temperature conditions of 180°C and 200°C, can resist NaCl saturation, and $CaCl_2$ saturation, and has good corrosion resistance. The reason may be that the copolymer has a relatively high molecular weight, contains a phosphonate radical group, can be efficiently adsorbed on the surfaces of clay particles to form a hydration film, and has a good fluid loss reduction ability under high temperature conditions, the introduction of the phosphonate radical group increases the calcium and salt resistance of the copolymer during use, and the copolymer has good corrosion resistance.

## BRIEF DESCRIPTION OF THE DRAWINGS

FIG. 1 is an infrared spectrum of sodium diallylaminomethylphosphonate solid powder obtained in Example 1 and Comparative example 1;

FIG. 2 is an infrared spectrum of bipolymers obtained by copolymerizing sodium diallylaminomethylphosphonate with acrylamide obtained in Example 1 and Comparative example 1;

FIG. 3 is a $^1$H NMR spectrum of sodium diallylaminomethylphosphonate solid powder in Example 1;

FIG. 4 is a $^1$H NMR spectrum of sodium diallylaminomethylphosphonate solid powder in Comparative example 1;

FIG. 5 is a $^1$H NMR spectrum of the bipolymer obtained by copolymerizing sodium diallylaminomethylphosphonate with acrylamide in Example 1;

FIG. 6 is a $^1$H NMR spectrum of the bipolymer obtained by copolymerizing sodium diallylaminomethylphosphonate with acrylamide in Comparative example 1;

FIG. 7 is a $^{31}$P NMR spectrum of sodium diallylaminomethylphosphonate solid powder in Example 1;

FIG. 8 is a $^{31}$P NMR spectrum of sodium diallylaminomethylphosphonate solid powder in Comparative example 1;

FIG. 9 is a $^{31}$P NMR spectrum of the bipolymer obtained by copolymerizing sodium diallylaminomethylphosphonate with acrylamide in Example 1;

FIG. 10 is a $^{31}$P NMR spectrum of the bipolymer obtained by copolymerizing sodium diallylaminomethylphosphonate with acrylamide in Comparative example 1;

FIG. 11 is an infrared spectrum of sodium diallylaminomethylphosphonate solid powder in Comparative example 2; and

FIG. 12 is a $^1$H NMR spectrum of sodium diallylaminomethylphosphonate solid powder in Comparative example 2.

## DETAILED DESCRIPTION

The endpoints and any values of the ranges disclosed herein are not limited to the precise range or value, and these ranges or values should be understood as including values close to these ranges or values. For numerical ranges, the endpoint values of each range, the endpoint values of each range and individual point values, and individual point values may be combined with each other to obtain one or more new numerical ranges, and these numerical ranges should be considered to be specifically disclosed herein.

According to a first aspect of the present disclosure, provided is a polymerizable phosphonic acid (salt), wherein an anion of the polymerizable phosphonic acid (salt) has a structure represented by the following formula (1), a cation of the polymerizable phosphonic acid (salt) is at least one of hydrogen, a monovalent metal cation, a divalent metal cation, a trivalent metal cation, and a tetravalent metal cation, and $^1H$ NMR of the phosphonic acid (salt) substantively has no peak around a chemical shift $\delta$ of 1.019,

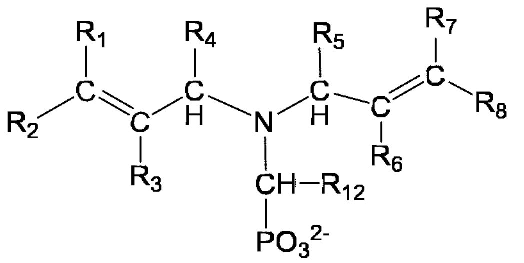

Formula (1),

wherein $R_1$, $R_2$, $R_3$, $R_4$, $R_5$, $R_6$, $R_7$ and $R_8$ are each independently hydrogen or C1-C10 linear or branched alkyl; preferably hydrogen or C1-C4 linear or branched alkyl; and more preferably hydrogen, methyl or ethyl.

In the present disclosure, examples of the C1-C10 linear or branched alkyl may be, for example, any one of methyl, ethyl, n-propyl, isopropyl, n-butyl, sec-butyl, isobutyl, tert-butyl, n-pentyl, isopentyl, tert-pentyl, neopentyl, n-hexyl, isohexyl, n-heptyl, isoheptyl, 2-methylhexyl, 2-ethylhexyl, 1-methylheptyl, 2-methylheptyl, n-octyl, isooctyl, n-nonyl, isononyl and 3,5,5-trimethylhexyl.

The polymerizable phosphonic acid (salt) of the present disclosure is water-soluble solid powder, easily soluble in water and slightly soluble in most organic solvents, and can be widely used in oilfield polymers, particularly in the synthesis of polymer treatment agents for drilling and completion as a novel monomer.

In the present disclosure, $^1H$ NMR of the polymerizable phosphonic acid (salt) substantively has no peak around the chemical shift $\delta$ of 1.019, which means that a peak height ratio of a peak around a chemical shift $\delta$ of 1.019 to a peak around a chemical shift $\delta$ of 5.83 is less than 0.05. Wherein around refers to an error caused by instruments and operations acceptable in the art, typically $\pm 1$ ppm. According to the present disclosure, the peak around the chemical shift $\delta$ of 1.019 and the peak around the chemical shift $\delta$ of 5.83 are assigned to $PO_3^{3-}$ and C=C groups, respectively, and the peak height ratio of the two peaks is less than 0.05, indicating that the phosphorous acid impurity content in the polymerizable phosphonic acid (salt) is very small, and even is lower than a detection limit of $^1H$ NMR.

As shown in FIG. 4, the polymerizable phosphonic acid (salt) obtained by using an aqueous solvent as a reaction solvent in the prior art has the most intense peak at a position of $\delta$ being 1.019 even when subjected to various purification steps.

As can be seen from FIG. 7, 31P NMR of the polymerizable phosphonic acid salt provided by the present disclosure has almost no a phosphorous acid peak around a chemical shift $\delta$ of 4.46, and this peak belongs to a $PO_3^{3-}$ group, also indicating that the polymerizable phosphonic acid salt provided by the present disclosure has higher purity and substantively does not contain the raw material phosphorous acid (lower than the detection limit).

In some embodiments, the polymerizable phosphonic acid (salt) has a liquid chromatography purity of 97-99.9 wt%, preferably 98.5-99.9 wt%. The liquid chromatography content of impurities is not more than 3 wt%. While the polymerizable phosphonic acid (salt) in the prior art typically has a liquid chromatographic purity of no more than 95 wt%, and contains no less than 5 wt% of a phosphorous acid or diallylamine impurity.

In some embodiments, an infrared spectrum of the polymerizable phosphonic acid (salt) is substantively free of a peak at 1606 $cm^{-1}$. The peak at 1606 $cm^{-1}$ corresponds to the diallylamine impurity, whereas because of the higher content of this impurity in the polymerizable phosphonic acid (salt) in the prior art, this peak is generally clearly visible in the infrared spectrum.

Since both the reaction raw materials and the product are water soluble, when water is used as a solvent of a reaction system, the phosphorous acid impurity and the diallylamine impurity are difficult to remove, and the presence of these impurities make it difficult for the molecular weight of a polymer to exceed 200,000 in a copolymerization reaction, and in particular, causes non-uniform distribution of the polymerizable phosphonic acid (salt) in a copolymer, thereby

affecting the temperature and salt resistance and corrosion and scale inhibition of a drilling fluid when the copolymer is used as a fluid loss additive. While the polymerizable phosphonic acid salt provided by the present disclosure, because of higher purity, only needs to be copolymerized with acrylamide, a commonly used component of a fluid loss additive to obtain a bipolymer, so that the temperature and salt resistance and corrosion and scale inhibition comparable to or even better than those of terpolymer and tetrapolymer fluid loss additives in the prior art can be achieved.

The above results all indicate that the polymerizable phosphonic acid (salt) provided by the present disclosure has higher purity. The inventors of the present disclosure found that when this polymerizable phosphonic acid (salt) having a higher purity and a phosphorous acid impurity content of less than 2 wt% is used to be copolymerized with common monomers of fluid loss additives for drilling fluid such as acrylamide, compared with the use of the polymerizable phosphonic acid (salt) in the prior art, the resulting polymer has a higher molecular weight and a significant increase in both high temperature resistance and salt resistance, and can maintain low fluid loss reduction at 200°C in a saturated sodium chloride/saturated calcium chloride aqueous solution. The reason may be that the higher purity makes it possible to obtain a higher molecular weight and a more uniform distribution of a phosphonate structural unit, which contributes to an increase in the cohesive strength of the polymer, thereby increasing the molecular structure stability of the polymer, and increasing the calcium pollution resistance and the corrosion and scale inhibition of the polymer.

In some embodiments, the cation of the polymerizable phosphonic acid (salt) is one or more of $Na^+$, $K^+$, $Li^+$, $Ca^{2+}$, $Mg^{2+}$, $Ba^{2+}$, $Cu^{2+}$, $Fe^{2+}$, $Fe^{3+}$, $Al^{3+}$, $Ti^{4+}$, and $Zr^{4+}$, preferably one or more of $Na^+$, $K^+$, $Li^+$, $Ca^{2+}$, $Mg^{2+}$, and $Ba^{2+}$.

In some embodiments, the polymerizable phosphonic acid (salt) has a solubility in water of not less than 40 g/100 g, preferably 40-65 g/100 g, for example, 52 g/100 g.

In the present disclosure, the test conditions for solubility are room temperature of 20°C, and atmospheric pressure.

According to a second aspect of the present disclosure, provided is a method for preparing a polymerizable phosphonic acid, wherein the polymerizable phosphonic acid has a structure represented by a formula (2), and the method includes reacting phosphorous acid sequentially with an amine represented by a formula (3) and an aldehyde in an organic solvent under reaction conditions,

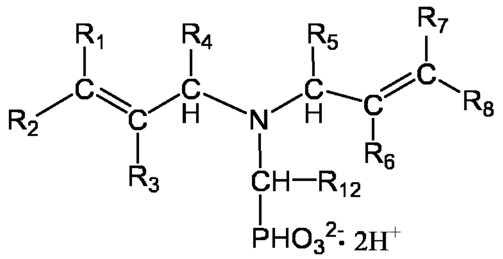

Formula (2),

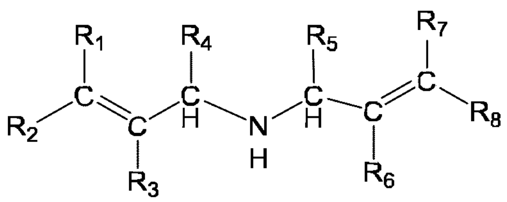

Formula (3),

wherein $R_1$, $R_2$, $R_3$, $R_4$, $R_5$, $R_6$, $R_7$ and $R_8$ are each independently hydrogen or C1-C10 linear or branched alkyl; preferably hydrogen or C1-C4 linear or branched alkyl; and more preferably hydrogen, methyl or ethyl.

In the present disclosure, examples of the C1-C10 linear or branched alkyl may be, for example, any one of methyl, ethyl, n-propyl, isopropyl, n-butyl, sec-butyl, isobutyl, tert-butyl, n-pentyl, isopentyl, tert-pentyl, neopentyl, n-hexyl, isohexyl, n-heptyl, isoheptyl, 2-methylhexyl, 2-ethylhexyl, 1-methylheptyl, 2-methylheptyl, n-octyl, isooctyl, n-nonyl, isononyl and 3,5,5-trimethylhexyl. According to the present disclosure, the organic solvent is used as a reaction solvent in the method for preparing the polymerizable phosphonic acid, and the entire reaction process is carried out without adding water. The inventors of the present disclosure found that the organic solvent is used as the reaction solvent, and the reaction process is carried out without adding water, so that the reaction efficiency can be improved, the reaction is completed within 1 h-8 h, and the occurrence of side reactions can be reduced while improving the purity of the product. This may be due to the fact that the solubility of the raw materials in the reaction solvent is higher than that of the reaction product, and the reaction product is substantively insoluble in the organic solvent, separation of the product from the raw materials can be easily realized, and the purity is higher. Whereas for the use of water as a reaction solvent, since both the product and the raw materials are easily soluble in the solvent, it is difficult to separate the product from the

unreacted raw materials and other by-products, thereby affecting the purity of the product, and further affecting the subsequent reaction, affecting the application properties of the polymerized product.

The preparation method of the present disclosure is a stepwise one-pot reaction, the reaction process is low in energy consumption, the process is short, and it is easy to achieve large-scale production.

In the present disclosure, an organic solvent reaction system is used in the preparation to facilitate subsequent separation of the product, clear separation of the product can be achieved only by the conventional separation means such as filtration or centrifugal separation, further drying is performed at a low temperature to obtain a target product, and the solvent is recycled.

In order to further improve the yield and purity of the product, the organic solvent is preferably an alcohol having 1-12 carbon atoms, an ester having 2-12 carbon atoms, an ether having 2-12 carbon atoms or a ketone having 2-12 carbon atoms, and is further preferably one or more of methanol, ethanol, butanol, ethyl acetate, butyl acetate, isoamyl acetate, diethyl ether, butyl ether, acetone, and methyl ethyl ketone.

In some embodiments, a volume ratio of the organic solvent to phosphorous acid is 1:1-15, preferably 1:0.5-8.

In some embodiments, a molar ratio of the amine represented by the formula (3) to phosphorous acid to the aldehyde is 1:(1-2):(1-2), preferably 1:(1-1.5):(1-1.5). Wherein the aldehyde is in terms of moles converted to formaldehyde.

In some embodiments, the reaction conditions include a pH of not more than 8 and a reaction temperature of -20°C to 10°C, preferably -10°C to 5°C.

In some embodiments, phosphorous acid is reacted with the amine represented by the formula (3) at a pH of 1-6.8, preferably 1-4, even more preferably 1-3.

In some embodiments, the method does not include adding water as a solvent.

In some embodiments, the pH of the reaction system is adjusted by adding an acidic substance selected from one or more of hydrochloric acid, sulfuric acid, nitric acid, oxalic acid, glacial acetic acid, carbonic acid, hydrofluoric acid, citric acid, malic acid, tartaric acid, and succinic acid.

In the present disclosure, the acidic substance may also adopt other inorganic acids and/or organic acids in addition to the above substances.

In some embodiments, the aldehyde is one or more of formaldehyde, diformaldehyde, metaformaldehyde, and paraformaldehyde, preferably formaldehyde.

In the present disclosure, the aldehyde is preferably added in a liquid form, for example, when formaldehyde is used, formaldehyde may be added directly in a liquid form; and when diformaldehyde, metaformaldehyde or paraformaldehyde is used, diformaldehyde, metaformaldehyde or paraformaldehyde may be first dissolved in an organic solvent, and then added in a liquid form. The organic solvent used may be one or more of an alcohol, an ester, an ether, and a ketone. Further, the number of carbon atoms of the alcohol, ester, ether, and ketone may be 1-12, and the organic solvent may specifically be selected from one or more of methanol, ethanol, butanol, ethyl acetate, butyl acetate, isoamyl acetate, diethyl ether, butyl ether, acetone, and methyl ethyl ketone.

According to a third aspect of the present disclosure, provided is a method for preparing a polymerizable phosphonic acid salt, including: preparing a polymerizable phosphonic acid by the method described above without separation and purification, and directly adding an alkaline substance for a neutralization reaction.

In some embodiments, the alkaline substance is selected from one or more of sodium hydroxide, potassium hydroxide, sodium carbonate, sodium bicarbonate, potassium carbonate, potassium bicarbonate, magnesium hydroxide, magnesium carbonate, calcium carbonate, calcium hydroxide, iron hydroxide, copper hydroxide, titanium hydroxide, zirconium hydroxide and the like, preferably sodium hydroxide and/or potassium hydroxide.

In the present disclosure, the alkaline substance may also adopt other inorganic bases and/or alkaline inorganic salts in addition to the above substances. Metal in the inorganic bases and/or alkaline inorganic salts is selected from one or more of monovalent, divalent, trivalent, and tetravalent metal elements.

In some embodiments, the neutralization reaction is carried out at a temperature of 0-90°C, preferably 20-40°C; and the neutralization reaction is carried out for 0.5-6 h, preferably 1-3 h.

In some embodiments, the method further includes subjecting a product obtained from the neutralization reaction to solid-liquid separation, and recycling the separated liquid phase. The liquid phase contains mainly the solvent and unreacted raw materials.

According to the present disclosure, a filtrate obtained after the solid-liquid separation may be continued to be recycled after being supplemented with fresh materials, thereby greatly reducing the production cost and improving the economy of the entire process.

According to one particularly preferred embodiment of the present disclosure, the method for preparing the polymerizable phosphonic acid salt includes the following steps of:

S1, mixing an organic solvent with phosphorous acid, and then adjusting a pH value of a reaction system to be not greater than 7, preferably 1-6.8, more preferably 1-4, further preferably 1-3;

S2, slowly adding diallylamine to the reaction system in the step S 1 for a reaction, the reaction temperature being -20°C to 10°C, preferably -10°C to 5°C;

S3, slowly adding an aldehyde to the system obtained after the reaction in the step S2 for a reaction, the reaction temperature being -20°C to 10°C, preferably -10°C to 5°C; and

S4, adjusting a pH value of the system obtained after the reaction in the step S3 to be 6-8, and continuing carrying out a reaction, the reaction temperature being 0-90°C, preferably 20-40°C, and the reaction time being 0.5-6 h, preferably 1-3 h, further separating the resulting reaction product, drying the separated solid phase at 60-120°C for 6-12 h to obtain the polymerizable phosphonic acid salt, and recycling the separated liquid phase to the step S 1 for further use.

In the step S4, the separating is solid-liquid separation, the solid-liquid separation may adopt any means that can realize solid-liquid two-phase separation, and in particular, one or more of filtration separation, centrifugal separation and the like may be adopted.

According to a fourth aspect of the present disclosure, provided is a polymerizable phosphonic acid salt prepared by the method described above. The polymerizable phosphonic acid salt obtained by this method has higher purity, and is used to be polymerized with acrylamide and the like to obtain a polymer, so that the temperature and salt resistance and corrosion and scale inhibition of the fluid loss additive can be significantly improved when the polymer is used as a fluid loss additive for a drilling fluid.

The polymerizable phosphonic acid (salt) of the present disclosure is water-soluble solid powder, easily soluble in water and slightly soluble in most organic solvents. The organic solvent is used as a reaction solvent in the preparation process, and the reaction process is carried out under anhydrous conditions, so that the reaction efficiency can be improved, the occurrence of side reactions can be reduced while improving the purity of the obtained product. The polymerizable phosphonic acid (salt) can be widely used in oilfield polymers, particularly in the synthesis of polymer treatment agents for drilling and completion as a novel monomer.

The polymerizable phosphonic acid (salt) provided by the invention can be used in oilfield chemicals, water treatment, paper industry, fiber industry, coating industry, water absorbing materials, printing and dyeing auxiliaries, and biomedicine, wherein the oilfield chemicals include, but are not limited to, polymeric reagents for oil flooding, enhanced oil recovery, viscosity reduction, water shut-off and profile control, drilling and completion, and the like.

According to a fifth aspect of the present disclosure, provided is a phosphonate radical-containing copolymer, including a structural unit A and a structural unit B; wherein the structural unit A is from the polymerizable phosphonic acid salt described above; the structural unit B is an acrylamide-based structural unit; a mass ratio of the structural unit A to the structural unit B is 1:3-3:1; and the copolymer has a weight average molecular weight of $2.5\times10^5$-$1.0\times10^7$.

In some embodiments, an anion of the structural unit A is a polymerizable phosphonic acid salt anion represented by a formula (I), a cation of the structural unit A is at least one of a monovalent metal cation, a divalent metal cation, a trivalent metal cation, and a tetravalent metal cation; and the structural unit B is an acrylamide-based structural unit represented by a formula (II),

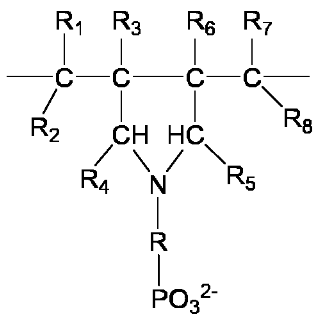
Formula (I),

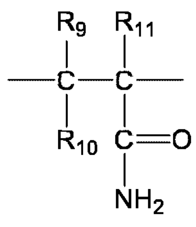
Formula (II),

wherein $R_1$, $R_2$, $R_3$, $R_4$, $R_5$, $R_6$, $R_7$, $R_8$, $R_9$, $R_{10}$ and $R_{11}$ are each independently hydrogen or C1-C10 linear or branched alkyl; preferably hydrogen or C1-C4 linear or branched alkyl; and more preferably hydrogen, methyl or ethyl.

In the present disclosure, examples of the C1-C10 linear or branched alkyl may be, for example, any one of methyl, ethyl, n-propyl, isopropyl, n-butyl, sec-butyl, isobutyl, tert-butyl, n-pentyl, isopentyl, tert-pentyl, neopentyl, n-hexyl, isohexyl, n-heptyl, isoheptyl, 2-methylhexyl, 2-ethylhexyl, 1-methylheptyl, 2-methylheptyl, n-octyl, isooctyl, n-nonyl, isononyl and 3,5,5-trimethylhexyl.

In the present disclosure, if the cation is represented by M, then M may be a monovalent metal, a divalent metal, a trivalent metal, or a tetravalent metal, and M is bonded to the polymerizable phosphonic acid salt anion in the form of an ionic bond. Further, when M is the monovalent metal, M may specifically be one or more of Group IA metals,

preferably sodium and/or potassium, more preferably sodium; when M is the divalent metal, M may specifically be selected from one or more of magnesium, calcium, copper, and ferrous iron; when M is the trivalent metal, M may specifically be selected from one or more of iron and aluminium; and when M is the tetravalent metal, M may specifically be selected from one or more of titanium and zirconium. Obviously, one structural unit A contains two M when M is the monovalent metal, and one structural unit A contains one M when M is the divalent metal according to the electroneutrality principle of a matter.

According to the present disclosure, a structural unit represented by the formula (I) is a polymerizable phosphonate radical structural unit that is from the polymerizable phosphonic acid (salt) described above; and a structural unit represented by the formula (II) is an acrylamide-based structural unit. When used as a fluid loss additive, the copolymer of the present disclosure still has a good fluid loss reducion effect at 180°C, can resist NaCl saturation, and $CaCl_2$ saturation, and has good corrosion resistance.

In some embodiments, an infrared spectrum of the copolymer is shown in FIG. 2. As can be seen from FIG. 2, there are obviously more miscellaneous peaks in an aqueous system, C-H bending vibration peaks of terminal alkenyl are at 990 $cm^{-1}$ and 954 $cm^{-1}$, -CN stretching vibration of an amide is at 1420 $cm^{-1}$, the characteristic absorption peak of carbonyl, i.e., C=O stretching vibration of the amide is at 1670 $cm^{-1}$, and a characteristic peak of N-H bending vibration of the amide is at 1620 $cm^{-1}$, demonstrating the presence of diallylamine and polyamide in the polymer.

In some embodiments, a $^1$H NMR spectrum of the copolymer is shown in FIG. 5. In FIG. 5, a peak at 1.1-1.8 ppm is relatively strong in intensity, and a peak at 5.5-6.3 ppm is relatively weak in intensity, and a peak height ratio of the two peaks is not less than 5: 1. A $^1$H NMR spectrum of a copolymer obtained from a phosphonic acid salt prepared with water as a solvent is shown in FIG. 6. In FIG. 6, a peak at 5.5-6.3 ppm is relatively strong in intensity, and a peak at 1.1-1.8 ppm is relatively weak in intensity, and a peak height ratio of the two peaks is almost 0.1:1. It is speculated that the reason may be that there is a certain amount of unreacted diallylamine in the phosphonic acid salt prepared with water as the solvent.

In some embodiments, the copolymer is a bipolymer containing the structural unit A and the structural unit B.

In some embodiments, the bipolymer is a random copolymer.

In some embodiments, a method for preparing the bipolymer includes mixing the polymerizable phosphonic acid salt monomer as described above with an acrylamide-based monomer represented by a formula (4) and water, then adding an initiator, carrying out a polymerization reaction, and drying the resulting reaction product to obtain the bipolymer.

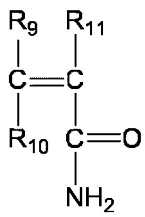

Formula (4)

wherein $R_9$, $R_{10}$ and $R_{11}$ are each independently hydrogen or C1-C10 linear or branched alkyl; preferably hydrogen or C1-C4 linear or branched alkyl; and more preferably hydrogen, methyl or ethyl.

In the present disclosure, examples of the C1-C10 linear or branched alkyl may be, for example, any one of methyl, ethyl, n-propyl, isopropyl, n-butyl, sec-butyl, isobutyl, tert-butyl, n-pentyl, isopentyl, tert-pentyl, neopentyl, n-hexyl, isohexyl, n-heptyl, isoheptyl, 2-methylhexyl, 2-ethylhexyl, 1-methylheptyl, 2-methylheptyl, n-octyl, isooctyl, n-nonyl, isononyl and 3,5,5-trimethylhexyl.

In some preferred embodiments, a mass ratio of the polymerizable phosphonic acid salt monomer to the acrylamide-based monomer represented by the formula (4) is 1:3-3:1.

In some preferred embodiments, the total mass concentration of the polymerizable phosphonic acid salt monomer and the acrylamide-based monomer represented by the formula (4) is 5%-60%.

In some preferred embodiments, the initiator is a persulfate, and in particular may be at least one of potassium persulfate, sodium persulfate, and ammonium persulfate.

In some preferred embodiments, the initiator is used in an amount of 0.05-1.5% of the total mass of the polymerizable phosphonic acid salt monomer and the acrylamide-based monomer represented by the formula (4).

In some preferred embodiments, the polymerization reaction is carried out at a temperature of 40-80°C, preferably 40-70°C.

In some preferred embodiments, the polymerization reaction is carried out for 1-6 h.

According to the present disclosure, the method for preparing the polymerizable phosphonic acid (salt) monomer uses the organic solvent as the solvent of the reaction system, so that compared with a water solvent system, the reaction

efficiency is higher, less by-products are produced, and the separation of the obtained products is simpler, clear separation of the product can be achieved only by the conventional separation means such as filtration or centrifugal separation, and the obtained product has higher purity, and thus a copolymer having a higher molecular weight can be obtained, and the temperature and salt resistance of a drilling fluid.

The bipolymer of the present disclosure has good water solubility, can be efficiently adsorbed on the surfaces of clay particles to form a hydration film, and has a good fluid loss reduction ability under high temperature conditions, good calcium and salt resistance and good corrosion resistance.

In addition to the structural unit A and the structural unit B described above, in some embodiments, the copolymer may also contain a structural unit C, wherein the structural unit C is one or more from a cationic monomer, an anionic monomer, a nonionic monomer, and a zwitterionic monomer. Thus, the copolymer may also be a terpolymer or more containing the structural unit A, the structural unit B and the structural unit C.

In some embodiments, the cationic monomer may be one or more of DMC (methacryloyloxyethyltrimethylammonium chloride), DMDAAC (dimethyldiallylammonium chloride), DAC (acryloyloxyethyltrimethylammonium chloride), DBC (acryloyloxyethyldimethylbenzylammonium chloride), DEDAAC (diethyldiallylammonium chloride), DMAEMA (dimethylaminoethyl methacrylate) and DMAEA (dimethylaminoethyl acrylate).

In some embodiments, the anionic monomer may be one or more of AA (acrylic acid), AMPS (2-acrylamido-2-methylpropanesulfonic acid), AS (sodium allylsulfonate), SS (sodium p-styrenesulfonate), AMOPS (2-acryloyloxy-2-methylpropanesulfonic acid), AOBS (acryloyloxybutylsulfonic acid), $AMC_{12}S$ (2-acrylamidododecanesulfonic acid), AOEMS (sodium 2-acryloyloxy-2-vinylmethylpropanesulfonate), FA (fumaric acid), SSS (sodium allylsulfonate) and AOIAS (sodium 2-acryloyloxyisoamylenesulfonate).

Further, the zwitterionic monomer may be one or more of DMAPS (methacryloyloxyethyl-N,N-dimethylpropanesulfonate), DAPS (N,N-dimethylallylaminepropanesulfonate), VPPS (4-vinylpyridinepropanesulfonate), MAPS (N-methyldiallylpropanesulfonate), and MABS (N-methyldiallylbutanesulfonate).

In some embodiments, the nonionic monomer may be one or more of NVP (N-vinylpyrrolidone), AN (acrylonitrile), NVF (vinyl formamide), and NVA (vinyl acetamide).

The introduction of different types of monomers can bring different properties to polymers, for example, when an anion is introduced, a polymer colloid protecting effect is acheived on a polydisperse bentonite colloid system, the stability of bentonite particles can be effectively maintained, and the better fluid loss reduction ability can be acheived under high temperature conditions; when a cation is introduced, the inhibition properties of the polymer are enhanced, the clay hydration ability can be reduced, and the drilling fluid can have the effects of flow pattern improvement and wellbore stability; and when a zwitterion is introduced, the polymer has good high temperature and salt resistance, and can effectively prevent formation damage and protect oil and gas production capacity. The combination of the above monomers with the phosphonate radical-containing monomer provided by the present disclosure may play a synergistic effect, further improving the calcium and salt resistance ability, and maintaining the rheological properties of the system.

In some preferred embodiments, the initiator is a persulfate, and in particular may be at least one of potassium persulfate, sodium persulfate, and ammonium persulfate.

In some preferred embodiments, the initiator is used in an amount of 0.05-1.5% of the total mass of the polymerizable phosphonic acid salt monomer, a P monomer and the acrylamide-based monomer represented by the formula (4).

In some preferred embodiments, the polymerization reaction is carried out at a temperature of 40-80°C, preferably 40-70°C.

In some preferred embodiments, the polymerization reaction is carried out for 1-6 h.

In some preferred embodiments, the drying is performed at a temperature of 30-80°C for 3-20 h.

The polymer obtained by the above preparation method can be used as oilfield chemicals, such as polymers for oil flooding, enhanced oil recovery, viscosity reduction, water shut-off and profile control, drilling and completion, and the like, and used in the fields of water treatment, paper industry, fiber industry, coating industry, water absorbing materials, printing and dyeing auxiliaries, biomedicine, and the like.

According to a seventh aspect of the present disclosure, provided is a drilling fluid containing the copolymer described above.

In some embodiments, the content of the copolymer is 0.5-5 wt% based on the total amount of the drilling fluid.

The copolymer of the present disclosure can be used as a fluid loss additive for the drilling fluid, and even if the copolymer is a bipolymer, the bipolymer still has a good fluid loss reducion effect under high temperature conditions of 180°C and 200°C, and still maintains a high fluid loss reducion effect in a saturated solution of NaCl, and a saturated solution of $CaCl_2$, and has good corrosion resistance. The reason may be that the copolymer contains a phosphonate radical group, and the phosphonic acid-containing monomer has higher purity, and the resulting polymer can be efficiently adsorbed on the surfaces of clay particles to form a hydration film, has a good fluid loss reduction ability under high temperature and high salt conditions, and has good corrosion resistance.

The function and effect of the method of the present disclosure will be described in detail below with reference to the following examples, but the following examples are not to be construed as limiting the solutions of the present

disclosure.

Where specific conditions were not specified in the following examples and comparative examples, they were carried out according to the conventional conditions or the conditions recommended by the manufacturer. The reagents or instruments used of which manufacturers were not specified were commercially available conventional products.

In the examples and comparative examples of the present disclosure, yield, wt%=(the actual weight of a product/the theoretical weight of the product)×100%, wherein the theoretical weight of the product was calculated by 100% conversion of diallylamine. The purity was obtained by liquid chromatography.

$^1H$ NMR was measured by using a Bruker Ravance III HD400 instrument;
$^{31}P$ NMR was measured by using a Bruker Ravance III HD400 instrument; and
An infrared spectrum was obtained by a potassium bromide pellet technique.

Example 1

(1) Synthesis of a polymerizable phosphonic acid salt: 5.7 g of phosphorous acid and 7 mL of anhydrous ethanol were added to a reaction vessel, then 2 mL of concentrated sulfuric acid (a concentration of 98 wt%) was added to adjust a pH value of the system to be 1, then the reaction vessel was placed in an ice-water bath, 8.6 mL of diallylamine was added dropwise by a constant pressure dropping funnel, the adding dropwise being controlled to be completed within 45 min, the temperature was raised to a reflux temperature after the adding dropwise was completed, and a reaction was continued to be carried out for 2 h. Then, a mixture of 12.6 g of paraformaldehyde and 7 mL of anhydrous ethanol was added by a constant pressure dropping funnel, the mixture being added dropwise and the adding dropwise being controlled to be completed within 20 min, and a reaction was continued to be carried out under reflux for 3 h after the adding dropwise was completed. Then 5.6 g of NaOH was added to the system to adjust the pH value of the system to be 7, and a reaction was carried out at 20°C for 1 h, and after further centrifugal separation by a centrifuge, the obtained solid material was further dried at 80°C for 10 h to obtain sodium diallylaminomethylphosphonate solid powder. An infrared spectrum of the target product is shown in FIG. 1, a $^1H$ NMR spectrum of the target product is shown in FIG. 3, and a $^{31}P$ NMR spectrum of the target product is shown in FIG. 7.

As can be seen from the infrared spectrum, spectral information is abundant at 900-1300 $cm^{-1}$, and this interval mainly includes stretching vibration of a C-P single bond and stretching vibration of a P=O double bond.

As can be seen from the $^1H$ NMR spectrum, a peak with a chemical shift $\delta$ of 5.20 and a peak with a chemical shift $\delta$ of 5.83 belong to hydrogens on different sides of a C=C double bond, respectively, and a peak with a chemical shift $\delta$ of 3.22 belongs to hydrogen on a terminal C atom of allyl connected to amino. And the $^1H$ NMR spectrum is substantively free of a peak at a position of $\delta$ being 1.019 assigned to the phosphorous acid raw material, indicating a higher purity.

As can be seen from the $^{31}P$ NMR spectrum, the $^{31}P$ NMR has a chemical shift $\delta$ of 11.51, and a tricoordinated phosphine ligand is in this chemical shift interval, proving that hydrogen on a P atom is substituted by alkyl. And the $^{31}P$ NMR spectrum is substantively free of a peak at a position of $\delta$ being 4.46 assigned to the phosphorous acid raw material, indicating a higher purity.

The above spectrum analysis in combination with the raw materials can prove that the resulting product is the target product sodium diallylaminomethylphosphonate.

(2) Preparation of a bipolymer: 4 g of the sodium diallylaminomethylphosphonate solid powder obtained in the step (1) and 10 g of acrylamide were taken to be successively added into 60 g of deionized water, after complete dissolution, oxygen was removed by introducing nitrogen for 15 min, then the temperature was raised to 65°C, 0.1 g of potassium persulfate was added, after a reaction was carried out for 2 h, excess acetone was added to obtain a white precipitate, and the white precipitate was dried at 80°C and pulverized to obtain a copolymer, and the results are shown in Table 1.

An infrared spectrum of the bipolymer product is shown in FIG. 2. A $^1H$ NMR spectrum of the bipolymer product is shown in FIG. 5, wherein a peak B at 1.1-1.8 ppm is relatively strong in intensity, and a peak at 5.5-6.3 ppm is relatively weak in intensity, and a peak height ratio of the two peaks is greater than 8:1. A $^{31}P$ NMR spectrum is shown in FIG. 9, and has a chemical shift $\delta$ of 6.212. The weight average molecular weight of the bipolymer was determined to be $5\times10^6$ by gel permeation chromatography (GPC).

The infrared and NMR spectra of monomers and copolymers obtained in the other examples are similar to those of Example 1, which will not be repeated.

Example 2

(1) Synthesis of a polymerizable phosphonic acid salt: 5.7 g of phosphorous acid and 7mL of ethyl acetate were successively added to a reaction vessel, then 2 mL of concentrated sulfuric acid (a concentration of 98 wt%) was added to adjust a pH value of the system to be 1, then the reaction vessel was placed in a water bath of -15°C, and 8.6 mL of diallylamine was added dropwise by a constant pressure dropping funnel, the adding dropwise being controlled to be completed within 30 min. Refluxing was continued to be performed for 2 h after the adding dropwise was completed. Then, a mixture of 12.6 g of paraformaldehyde and 7 mL of ethyl acetate was added in a constant pressure dropping funnel to be added dropwise, the adding dropwise being controlled to be completed within 20 min, and a reaction was continued to be carried out under reflux for 3 h after the adding dropwise was completed. Then 5.6 g of NaOH was added to the system to adjust the pH value of the system to be 7, and a reaction was carried out at 20°C for 1 h, and after further centrifugal separation by a centrifuge, the obtained solid material was further dried at 80°C for 10 h to obtain a target product sodium diallylaminomethylphosphonate solid powder.
(2) Preparation of a bipolymer: 15 g of the sodium diallylaminomethylphosphonate solid powder obtained in the step (1) and 5 g of acrylamide were taken to be successively added into 80 g of deionized water, after complete dissolution, oxygen was removed by introducing nitrogen for 30 min, the temperature was raised to 65°C, 0.3 g of potassium persulfate was added, after a reaction was carried out for 2 h, excess acetone was added to obtain a white precipitate, and the white precipitate was dried at 80°C and pulverized to obtain a copolymer, and the results are shown in Table 1.

Example 3

(1) Synthesis of a polymerizable phosphonic acid salt: 15 g of phosphorous acid and 14 mL of anhydrous ethanol were successively added to a reaction vessel, then 6 mL of concentrated sulfuric acid (98 wt%) was added to adjust a pH value of the system to be 1, then the reaction vessel was placed in an ice-water bath, and 8.6 mL of diallylamine was added dropwise by a constant pressure dropping funnel, the adding dropwise being controlled to be completed within 45 min. A reaction was continued to be carried out under reflux for 3 h after the adding dropwise was completed. Then, a mixture of 15 g of metaformaldehyde and 14 mL of anhydrous ethanol was added in a constant pressure dropping funnel to be added dropwise, the adding dropwise being completed within 40 min. Refluxing was continued to be performed for 4 h after the adding dropwise was completed. 11.5 g of KOH was added to the system to adjust the pH value of the system to be 7, and a reaction was carried out at 20°C for 3 h, and after further centrifugal separation by a centrifuge, the obtained solid material was further dried at 90°C for 10 h to obtain a target product potassium diallylaminomethylphosphonate solid powder.
(2) Preparation of a bipolymer: 5 g of the potassium diallylaminomethylphosphonate solid powder obtained in the step (1) and 10 g of acrylamide were taken to be successively added into 70 g of deionized water, after complete dissolution, oxygen was removed by introducing nitrogen for 10 min, the temperature was raised to 65°C, 0.1 g of potassium persulfate was added, after a reaction was carried out for 2 h, excess acetone was added to obtain a white precipitate, and the white precipitate was dried at 80°C and pulverized to obtain a copolymer, and the results are shown in Table 1.

Example 4

(1) Synthesis of a polymerizable phosphonic acid salt: 5.7 g of phosphorous acid and 7 mL of methanol were added to a reaction vessel, then 7 mL of oxalic acid was added to adjust a pH value of the system to be 2, then the reaction vessel was placed in an ice-water bath, 8.6 mL of diallylamine was added dropwise by a constant pressure dropping funnel, the adding dropwise being controlled to be completed within 45 min, and a reaction was continued to be carried out under reflux for 2 h after the adding dropwise was completed. Then, a mixture of 6.3 g of paraformaldehyde and 3.5 mL of methanol was added by a constant pressure dropping funnel, the mixture being added dropwise and the adding dropwise being controlled to be completed within 10 min, and a reaction was continued to be carried out under reflux for 1.5 h after the adding dropwise was completed. Then 5.6 g of NaOH was added to the system to adjust the pH value of the system to be 7, and a reaction was carried out at 20°C for 2 h, and after further centrifugal separation by a centrifuge, the obtained solid material was further dried at 80°C for 10 h to obtain a target product sodium diallylaminomethylphosphonate solid powder.

(2) Preparation of a bipolymer: 4 g of the sodium diallylaminomethylphosphonate solid powder obtained in the step (1) and 10 g of acrylamide were taken to be successively added into 70 g of deionized water, after complete dissolution, oxygen was removed by introducing nitrogen for 5 min, the temperature was raised to 80°C, 0.14 g of sodium persulfate was added, after a reaction was carried out for 2 h, excess acetone was added to obtain a white precipitate, and the white precipitate was dried at 80°C and pulverized to obtain a copolymer, and the results are shown in Table 1.

Example 5

(1) Synthesis of a polymerizable phosphonic acid salt: 11.4 g of phosphorous acid and 7 mL of anhydrous ethanol were successively added into a reaction vessel, then 3 mL of concentrated nitric acid (a concentration of 70 wt%) was added to adjust a pH value of the system to be 1, then the reaction vessel was placed in an ice-water bath, 8.6 mL of diallylamine was added dropwise by a constant pressure dropping funnel, the adding dropwise being controlled to be completed within 45 min, and a reaction was continued to be carried out under reflux for 2.5 h after the adding dropwise was completed. Then, a mixture of 6.3 g of paraformaldehyde and 7 mL of anhydrous ethanol was added by a constant pressure dropping funnel, the mixture being added dropwise and the adding dropwise being controlled to be completed within 10 min, and a reaction was continued to be carried out under reflux for 1.5 h after the adding dropwise was completed. Then 5.6 g of KOH was added to the system to adjust the pH value of the system to be 7, and a reaction was carried out at 20°C for 2.5 h, and after further centrifugal separation by a centrifuge, the obtained solid material was further dried at 80°C for 10 h to obtain a target product potassium diallylaminomethylphosphonate solid powder.

(2) Preparation of a bipolymer: 8 g of the potassium diallylaminomethylphosphonate solid powder obtained in the step (1) and 24 g of acrylamide were taken to be successively added into 100 g of deionized water, after complete dissolution, oxygen was removed by introducing nitrogen for 30 min, the temperature was raised to 60°C, 0.48 g of potassium persulfate was added, after a reaction was carried out for 3 h, excess acetone was added to obtain a white precipitate, and the white precipitate was dried at 80°C and pulverized to obtain a copolymer, and the results are shown in Table 1.

Example 6

(1) Synthesis of a polymerizable phosphonic acid salt: 11.4 g of phosphorous acid and 7 mL of butanol were successively added to a reaction vessel, then 7 mL of oxalic acid was added to adjust a pH value of the system to be 2, then the reaction vessel was placed in an ice-water bath, 8.6 mL of diallylamine was added dropwise by a constant pressure dropping funnel, the adding dropwise being controlled to be completed within 45 min, and a reaction was continued to be carried out under reflux for 2.5 h after the adding dropwise was completed. Then, a mixture of 12.6 g of diformaldehyde and 7 mL of butanol was added by a constant pressure dropping funnel, the mixture being added dropwise and the adding dropwise being controlled to be completed within 10 min. After the adding dropwise was completed, a reaction was continued to be carried out under reflux for 1.5 h, then 5.6 g of NaOH was added to the system to adjust the pH value of the system to be 7, and a reaction was carried out at 20°C for 2.5 h, and after further centrifugal separation by a centrifuge, the obtained solid material was further dried at 80°C for 10 h to obtain a target product sodium diallylaminomethylphosphonate solid powder.

(2) Preparation of a bipolymer: 5 g of the sodium diallylaminomethylphosphonate solid powder obtained in the step (1) and 5 g of acrylamide were taken to be successively added into 50 g of deionized water, after complete dissolution, oxygen was removed by introducing nitrogen for 10 min, the temperature was raised to 50°C, 0.15 g of potassium persulfate was added, after a reaction was carried out for 3 h, excess acetone was added to obtain a white precipitate, and the white precipitate was dried at 80°C and pulverized to obtain a copolymer, and the results are shown in Table 1.

Example 7

(1) Synthesis of a polymerizable phosphonic acid salt: 5.7 g of phosphorous acid and 7 mL of methanol were added to a reaction vessel, then 4 mL of glacial acetic acid was added to adjust a pH value of the system to be 4.5, then the reaction vessel was placed in an ice-water bath, 7.5 mL of diallylamine was added dropwise by a constant

pressure dropping funnel, the adding dropwise being controlled to be completed within 40 min, and a reaction was continued to be carried out under reflux for 3 h after the adding dropwise was completed. Then, a mixture of 7 g of paraformaldehyde and 5 mL of methanol was added by a constant pressure dropping funnel, the mixture being added dropwise and the adding dropwise being controlled to be completed within 10 min, and a reaction was continued to be carried out under reflux for 1.5 h after the adding dropwise was completed. Then 9 g of $Ca(OH)_2$ was added to the system to adjust the pH value of the system to be 7.5, and a reaction was carried out at 20°C for 3 h, and after further centrifugal separation by a centrifuge, the obtained solid material was further dried at 80°C for 10 h to obtain a target product calcium diallylaminomethylphosphonate solid powder.

(2) Preparation of a bipolymer: 8 g of the calcium diallylaminomethylphosphonate solid powder obtained in the step (1) and 10 g of acrylamide were taken to be successively added into 70 g of deionized water, after complete dissolution, oxygen was removed by introducing nitrogen for 10 min, the temperature was raised to 60°C, 0.1 g of potassium persulfate was added, after a reaction was carried out for 2 h, excess acetone was added to obtain a white precipitate, and the white precipitate was dried at 80°C and pulverized to obtain a copolymer, and the results are shown in Table 1.

Example 8

(1) Synthesis of a polymerizable phosphonic acid salt: 11.4 g of phosphorous acid and 7 mL of butanol were successively added to a reaction vessel, then 5 mL of oxalic acid was added to adjust a pH value of the system to be 3, then the reaction vessel was placed in an ice-water bath, 8.6 mL of diallylamine was added dropwise by a constant pressure dropping funnel, the adding dropwise being controlled to be completed within 45 min, and a reaction was continued to be carried out under reflux for 2.5 h after the adding dropwise was completed. Then, a mixture of 10.6 g of diformaldehyde and 7 mL of butanol was added by a constant pressure dropping funnel, the mixture being added dropwise and the adding dropwise being controlled to be completed within 10 min. After the adding dropwise was completed, a reaction was continued to be carried out under reflux for 1.5 h, then 8.8 g of $Mg(OH)_2$ was added to the system to adjust the pH value of the system to be 7.5, and a reaction was carried out at 20°C for 2.5 h, and after further centrifugal separation by a centrifuge, the obtained solid material was further dried at 80°C for 10 h to obtain a target product magnesium diallylaminomethylphosphonate solid powder.

(2) Preparation of a bipolymer: 10 g of the magnesium diallylaminomethylphosphonate solid powder obtained in the step (1) and 10 g of acrylamide were taken to be successively added into 60 g of deionized water, after complete dissolution, oxygen was removed by introducing nitrogen for 10 min, the temperature was raised to 40°C, 0.2 g of potassium persulfate was added, after a reaction was carried out for 2 h, excess acetone was added to obtain a white precipitate, and the white precipitate was dried at 80°C and pulverized to obtain a copolymer, and the results are shown in Table 1.

Comparative example 1

(1) Synthesis of a polymerizable phosphonic acid salt: 5.7 g of phosphorous acid and 7 mL of water were successively added into a reaction vessel, then 3 mL of concentrated nitric acid (a concentration of 70 wt%) was added to adjust a pH value of the system to be 1, then the reaction vessel was placed in an ice-water bath, 8.6 mL of diallylamine was added dropwise by a constant pressure dropping funnel, the adding dropwise being controlled to be completed within 45 min, and a reaction was continued to be carried out under reflux for 2 h after the adding dropwise was completed. Then, a mixture of 12.6 g of paraformaldehyde and 7 mL of water was added in a constant pressure dropping funnel to be added dropwise, the adding dropwise being controlled to be completed within 40 min. A reaction was continued to be carried out under reflux for 2 h after the adding dropwise was completed. 5.6 g of NaOH was added to the system to adjust the pH value of the system to be 7, and a reaction was carried out at 20°C for 1 h, after further centrifugal separation by a centrifuge, the resulting product was washed for 3 times with ethanol, and the obtained solid material was further dried at 80°C for 10 h to obtain a target product sodium diallylaminomethylphosphonate solid powder.

An infrared spectrum of the target product is shown in FIG. 1, a $^{1}H$ NMR spectrum of the target product is shown in FIG. 4, and a $^{31}P$ NMR spectrum of the target product is shown in FIG. 8.

As can be seen from the infrared spectrum, there are many miscellaneous peaks in the infrared spectrum of a phosphonic acid based monomer prepared by an aqueous system. For example, a small shoulder peak appears at

3075cm$^{-1}$, indicating the presence of $v_{C-H}$ stretching vibration of an olefin, and weaker $v_{C=C}$ stretching vibration also appears at 1649 cm$^{-1}$, and the above two points indicate the presence of the olefin. A characteristic medium-intensity broad peak of $\delta_{N-H}$ is present at 1606 cm$^{-1}$, a weak absorption peak of $v_{C-N}$ is present at 1072 cm$^{-1}$ and a broad absorption peak of $\gamma_{N-H}$ is present at 830 cm$^{-1}$, indicating the presence of amines, and the above two points indicate the presence of unreacted diallylamine.

As can be seen from the $^1$H NMR spectrum, a peak at a chemical shift $\delta$ of 1.019 is relatively strong in intensity, which belongs to the raw material phosphorous acid. It is proved that there is unreacted phosphorous acid in the raw material. And the intensity of the peak at the chemical shift $\delta$ of 1.019 is significantly stronger than that of a peak at a chemical shift $\delta$ of 5.15, indicating a higher impurity content.

As can be seen from the $^{31}$P NMR spectrum, the $^{31}$P NMR has a chemical shift $\delta$ of 13.19, but two peaks with a chemical shift $\delta$ of 4.63 and a chemical shift $\delta$ of 4.25 are present at the same time, proving the presence of impurities. (2) Preparation of a bipolymer: 4 g of the sodium diallylaminomethylphosphonate solid powder obtained in the step (1) and 10 g of acrylamide were taken to be successively added into 60 g of deionized water, after complete dissolution, oxygen was removed by introducing nitrogen for 15 min, the temperature was raised to 65°C, 0.1 g of potassium persulfate was added, after a reaction was carried out for 2 h, excess acetone was added to obtain a white precipitate, and the white precipitate was dried at 80°C and pulverized to obtain a copolymer, and the results are shown in Table 1.

An infrared spectrum of the bipolymer product is shown in FIG. 2, a $^1$H NMR spectrum of the bipolymer product is shown in FIG. 6, and a $^{31}$P NMR spectrum of the bipolymer product is shown in FIG. 10, wherein a peak at 1.1-1.8 ppm is relatively strong in intensity, a peak at 5.5-6.3 ppm is relatively weak in intensity, and a peak height ratio of a peak A to a peak B is about 0.1:1.

Comparative example 2

(1) Synthesis of a polymerizable phosphonic acid salt: 5.7 g of phosphorous acid, 3.5 mL of water, and 3.5 mL of ethyl acetate were added to a reaction vessel, then 4 mL of glacial acetic acid was added, the reaction vessel was placed in an ice-water bath, 8.6 mL of diallylamine was slowly added dropwise to the mixture, the dropwise adding being controlled to be completed within 45 min, and a reaction was continued to be carried out under reflux for 3 h. Then a mixture of 12.6 g of paraformaldehyde, 3.5 mL of water, 3.5 mL of ethyl acetate was added proportionally to the system, the addition time being controlled at 60 min. The mixture was continued to be refluxed for 4 h. 5.6 g of NaOH was added to the system to adjust the pH value of the system to be 7, and a reaction was carried out at 20°C for 1 h, after further centrifugal separation by a centrifuge, the resulting product was washed for 3 times with ethanol, and the obtained solid material was further dried at 80°C for 10 h to obtain a target product sodium diallylaminomethylphosphonate solid powder.

An infrared spectrum of the target product is shown in FIG. 11, and a $^1$H NMR spectrum of the target product is shown in FIG. 12.

As can be seen from the infrared spectrum, a peak at 1640 cm$^{-1}$ is C=C stretching vibration, and peaks at 914 cm$^{-1}$ and 980 cm$^{-1}$ are out-of-plane rocking vibration of =C-H, demonstrating the presence of unreacted diallylamine.

As can be seen from the $^1$H NMR spectrum, a miscellaneous peak appears in a mixed system, for example, a peak with a chemical shift $\delta$ of 1.826, compared with a pure solvent system.

(2) Preparation of a bipolymer: 4 g of the sodium diallylaminomethylphosphonate solid powder obtained in the step (1) and 10 g of acrylamide were taken to be successively added into 60 g of deionized water, after complete dissolution, oxygen was removed by introducing nitrogen for 15 min, the temperature was raised to 65°C, 0.1 g of potassium persulfate was added, after a reaction was carried out for 2 h, excess acetone was added to obtain a white precipitate, and the white precipitate was dried at 80°C and pulverized to obtain a copolymer, and the results are shown in Table 1.

Comparative example 3

5 g of DAC (acryloyloxyethyltrimethylammonium chloride), 5 g of AMPS and 10 g of acrylamide were taken to be successively added into 120 g of deionized water, after complete dissolution, oxygen was removed by introducing nitrogen for 10 min, the temperature was raised to 40°C, 0.2 g of ammonium persulfate was added, after a reaction was carried out for 2 h, excess acetone was added to obtain a white precipitate, and the white precipitate was dried at 80°C and pulverized to obtain a copolymer, and the results are shown in Table 1.

Table 1

| Example No. | Solvent/acid | Yield of polymerizable phosphonate | Purity of polymerizable phosphonate | Weight average molecular weight of copolymer |
|---|---|---|---|---|
| Example 1 | Anhydrous ethanol/ concentrated sulfuric acid | 91.1% | 98.5% | 5 million |
| Example 2 | Ethyl acetate/ concentrated sulfuric acid | 91% | 98.5% | 5.2 million |
| Example 3 | Anhydrous ethanol/ concentrated sulfuric acid | 90% | 98.6% | 5.4 million |
| Example 4 | Anhydrous ethanol/ concentrated nitric acid | 90.0% | 97.2% | 4.1 million |
| Example 5 | Butanol/oxalic acid | 90.2% | 97.1% | 4.5 million |
| Example 6 | Methanol/oxalic acid | 90.2% | 97.9% | 4.2 million |
| Example 7 | Methanol/glacial acetic acid | 91.2% | 97.2% | 4.4 million |
| Example 8 | Butanol/oxalic acid | 92.0% | 97.3% | 4.3 million |
| Comparative example 1 | Water/concentrated nitric acid | 87.5% | 80.2% | 200,000 |
| Comparative example 2 | Water/ethyl acetate/ glacial acetic acid | 87.8% | 84.2% | 250,000 |
| Comparative example 3 | / | / | / | 5 million |

**Evaluation test**

The fluid loss reduction performance of the copolymers obtained in Examples 1-8 and Comparative examples 1-3 was evaluated by using a salt-containing calcium-containin base slurry, and a specific evaluation method was as follows:

**Salt (sodium) resistance evaluation method**

350 mL of fresh water base slurry was measured, and stirred at a high speed for 5 min, then 3.0 wt% of copolymer was added, the mixture was stirred at a high speed for 5 min, and medium pressure fluid loss was measured according to the test method of GB/T16783.2-2012 after curing for 24 h at normal temperature. By examining the addition of different amounts of NaCl in the fresh water base slurry, the change in fluid loss reduction was determined, wherein the lower the fluid loss reduction, the better. The results of fluid loss under different NaCl concentrations are shown in Table 2.

**Calcium resistance evaluation method**

350 mL of saturated brine base slurry was measured, and stirred at a high speed for 5 min, then 3.0 wt% of copolymer was added, the mixture was stirred at a high speed for 5 min, and medium pressure fluid loss was measured according to the test method of GB/T16783.2-2012 after curing for 24 h at normal temperature. The amount of $CaCl_2$ was continuously increased in the saturated brine base slurry, and the change in fluid loss reduction was determined. The results of fluid loss under different $CaCl_2$ concentrations are shown in Table 3.

**High temperature resistance evaluation method**

(1) Medium pressure fluid loss

350 mL of brine base slurry (4% NaCl) was measured, 3.0 wt% of copolymer was added, the mixture was stirred at a high speed for 5 min, and aged at different temperatures for 16 h, the aged material was taken out, cooled to normal temperature, and stirred at a high speed for 20 min, and medium pressure fluid loss was measured according to the test method of GB/T16783.2-2012, and the specific results are shown in Table 4.

(2) High-temperature and high-pressure fluid loss

200 mL of brine base slurry (4% NaCl) was measured, 3.0 wt% of copolymer was added, the mixture was stirred at a high speed for 5 min, and then fluid loss measurement was performed according to the test method of GB/T16783.2-2012 by using a high-temperature and high-pressure filter press, the temperature being set to be 200°C and the pressure being set to be 3.5 MPa, and the specific results are shown in Table 4.

Wherein preparation methods for the fresh water base slurry, the brine base slurry and the saturated brine base slurry were as follows:

fresh water base slurry: 40 g of calcium bentonite and 5 g of sodium carbonate were added into 1000 mL of water, and the mixture was stirred at a high speed for 20 min, and cured at room temperature (25°C, the same below) for 24 h to obtain the fresh water base slurry.

Brine base slurry: to 1000 mL of fresh water base slurry was added 4 wt% NaCl, and the mixture was stirred at a high speed for 20 min, and cured at room temperature for 24 h to obtain the brine base slurry.

Saturated brine base slurry: to 1000 mL of fresh water base slurry was added 36 wt% NaCl, and the mixture was stirred at a high speed for 20 min, and cured at room temperature for 24 h to obtain the saturated brine base slurry.

**Corrosion inhibition evaluation method**

A corrosion inhibition rate at atmospheric pressure was measured according to SY/T 5273-2000, which included the following steps: weighed metal test pieces were respectively hung into a test medium with and without a polymer solution, and soaked for a certain time under specified conditions, and the test pieces were taken out, washed, dried, and weighed. A corrosion inhibition rate was calculated according to a formula (1):

$$\text{Corrosion inhibition rate} = \frac{\Delta m_0 - \Delta m_1}{\Delta m_0} \quad (1)$$

wherein $\Delta m_0$ is mass loss in g of a hanging specimen in a blank test (the polymer solution was not added); and $\Delta m_1$ is mass loss in g of a hanging specimen in a test where the polymer solution was added.

The test medium was self-made simulated water, its mineralization and ion concentration were prepared based on the actual water quality on site, the concentration of $Ca^{2+}$ in the water is 20000mg/L, the concentration of $Mg^{2+}$ in the water is 920mg/L, and the total concentration of $K^+$ and $Na^+$ in the water is 45530mg/L. The polymer solution was an aqueous solution containing 5 wt% of bipolymer solid, and the corrosion inhibition rates under different polymer solution addition amounts were experimentally determined. The higher the corrosion inhibition rate, the better the corrosion inhibition. The results are shown in Table 5.

**Scale inhibition evaluation method**

A scale inhibition rate was determined by using a static scale inhibition method: a quantitative amount of polymer powder was added to formulated water containing a certain concentration of $Ca^{2+}$ and $HCO_3^-$ to obtain a solution with a polymer concentration of 200 mg/L. Heat preservation was performed at a pH of 7 at 80°C for 8 h, and the resulting material was taken out, cooled, well shaken and filtered. A certain amount of the obtained filtrate was taken to determine the $Ca^{2+}$ concentration in the solution by EDTA complexometry. A scale inhibition rate of a corrosion and scale inhibitor was calculated according to a formula (2):

$$\text{Scale inhibition rate} = \frac{V_1 - V_0}{V_2 - V_0} \times 100\% \quad (2)$$

wherein $V_0$, $V_1$, and $V_2$ are the number of milliliters of EDTA consumed for the determination of total calcium in water without polymer and with polymer and normal temperature formulated water, respectively. The higher the scale inhibition rate, the better the scale inhibition. The results are shown in Table 5.

Table 2 Salt resistance evaluation

| NaCl concentration / Fluid loss/mL | 0 | 5 wt% | 10 wt% | 20 wt% | 36 wt% (saturated) |
|---|---|---|---|---|---|
| Example 1 | 5.9 | 6.5 | 7.8 | 9.8 | 11.0 |
| Example 2 | 6.5 | 7.2 | 8.3 | 9.6 | 11.5 |
| Example 3 | 5.8 | 6.8 | 7.9 | 8.6 | 11.6 |
| Example 4 | 6.6 | 7.8 | 8.9 | 10.5 | 13.0 |
| Example 5 | 6.8 | 7.7 | 8.6 | 10.3 | 13.5 |
| Example 6 | 6.3 | 7.0 | 8.6 | 9.1 | 12.5 |
| Example 7 | 6.8 | 7.6 | 8.5 | 9.5 | 12.8 |
| Example 8 | 6.9 | 7.0 | 7.7 | 9.9 | 12.5 |
| Comparative example 1 | 7.8 | 12.7 | 19.5 | 26.8 | 30.5 |
| Comparative example 2 | 7.9 | 14.8 | 22.6 | 32.5 | 40.9 |
| Comparative example 3 | 7.0 | 7.9 | 9.2 | 11.7 | 14.5 |

Table 3 Calcium resistance evaluation

| Fluid loss/mL \ $CaCl_2$ concentration | 0 | 5 wt% | 10 wt% | 20 wt% | 40 wt% (saturated) |
|---|---|---|---|---|---|
| Example 1 | 6.2 | 7.1 | 8.5 | 9.8 | 11.5 |
| Example 2 | 6.5 | 7.0 | 7.8 | 9.3 | 11.1 |
| Example 3 | 6.5 | 7.1 | 7.8 | 8.9 | 10.9 |
| Example 4 | 6.6 | 7.8 | 7.9 | 9.4 | 12.6 |
| Example 5 | 7.0 | 7.5 | 8.1 | 9.8 | 13.2 |
| Example 6 | 6.3 | 7.7 | 8.3 | 9.5 | 12.8 |
| Example 7 | 6.5 | 7.8 | 8.6 | 9.0 | 12.7 |
| Example 8 | 6.8 | 7.4 | 8.3 | 9.0 | 12.2 |
| Comparative example 1 | 16.0 | 25.8 | 31.6 | 46.8 | 57.0 |
| Comparative example 2 | 15.8 | 24.3 | 30.8 | 42.5 | 48.9 |
| Comparative example 3 | 7.1 | 7.9 | 8.8 | 9.9 | 14.1 |

Table 4 High temperature resistance evaluation

| Fluid loss/mL \ Aging conditions | 150°C | 180°C | 200°C | 3.5 MPa |
|---|---|---|---|---|
| Example 1 | 7.0 | 8.5 | 10.2 | 13.5 |
| Example 2 | 7.0 | 8.6 | 10.8 | 13.6 |
| Example 3 | 7.6 | 8.3 | 11.2 | 13.8 |
| Example 4 | 7.5 | 8.5 | 11.3 | 13.9 |
| Example 5 | 7.3 | 9.0 | 11.9 | 14.0 |
| Example 6 | 7.1 | 8.2 | 10.7 | 13.8 |
| Example 7 | 7.8 | 9.8 | 10.9 | 13.7 |
| Example 8 | 7.0 | 9.4 | 11.1 | 13.9 |
| Comparative example 1 | 16.2 | 32.1 | 56.4 | 145.2 |
| Comparative example 2 | 15.3 | 30.2 | 46.7 | 138.6 |
| Comparative example 3 | 7.8 | 9.6 | 12.0 | 14.8 |

As can be seen from Tables 2, 3 and 4, the fluid losses all increase with the increase of $Na^+$ and $Ca^{2+}$ concentration or temperature. Compared with the aqueous system and the mixed system, the phosphonic acid based monomer prepared by the pure solvent system has better performance, and the performance of the bipolymer is equivalent to that of the existing terpolymer with AMPS.

As can be seen from Table 4, the high-temperature and high-pressure fluid losses of the bipolymers provided by the present disclosure are all maintained about 14 mL, while the fluid losses in the comparative examples are all greater than 100 mL, illustrating the good effect of the bipolymers of the present disclosure in terms of high-temperature

and high-pressure fluid loss.

Table 5 Corrosion inhibition evaluation

| Example No. | Corrosion inhibition | | | | Scale inhibition rate |
|---|---|---|---|---|---|
| | 1 wt% | 3 wt% | 5 wt% | 10 wt% | |
| Example 1 | 50 | 66 | 72 | 80 | 94.2% |
| Example 2 | 46 | 64 | 78 | 81 | 94.3% |
| Example 3 | 47 | 65 | 73 | 80 | 94.5% |
| Example 4 | 45 | 67 | 72 | 81 | 93.4% |
| Example 5 | 50 | 61 | 71 | 81 | 93.5% |
| Example 6 | 49 | 65 | 73 | 82 | 93.8% |
| Example 7 | 49 | 62 | 77 | 86 | 93.3% |
| Example 8 | 52 | 65 | 70 | 82 | 93.5% |
| Comparative example 1 | 32 | 37 | 40 | 50 | 83.6% |
| Comparative example 2 | 33 | 39 | 42 | 51 | 83.8% |
| Comparative example 3 | 25 | 32 | 37 | 42 | 93.2% |

As can be seen from Table 5, the corrosion inhibition rates all increase with the increase of concentration. Compared with the aqueous system and the mixed system, the phosphonic acid based monomer prepared by the pure solvent system has better performance.

As can be seen from Table 5, the bipolymers provided by the present disclosure all have a better scale inhibition effect. Compared with the aqueous system and the mixed system, the phosphonic acid based monomer prepared by the pure solvent system has better performance, and the performance of the bipolymer is equivalent to that of the existing terpolymer with AMPS.

Preferred embodiments of the present disclosure are described above in detail, but the present disclosure is not limited thereto. Within the technical concept range of the present disclosure, the technical solution of the present disclosure can be subjected to various simple variations, including the combination of various technical features in any other suitable manner, and these simple variations and combinations should likewise be considered as the contents disclosed by the present disclosure, and all fall within the protection scope of the present disclosure.

## Claims

1. A polymerizable phosphonic acid (salt), wherein an anion of the polymerizable phosphonic acid (salt) has a structure represented by the following formula (1), a cation of the polymerizable phosphonic acid (salt) is at least one of hydrogen, a monovalent metal cation, a divalent metal cation, a trivalent metal cation, and a tetravalent metal cation, and $^1H$ NMR of the polymerizable phosphonic acid (salt) substantively has no peak around a chemical shift $\delta$ of 1.019,

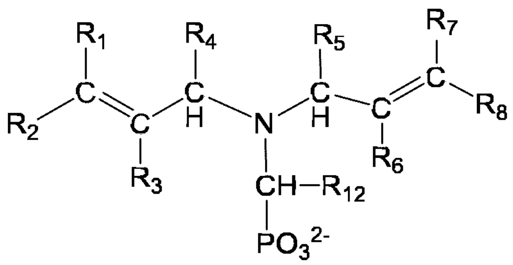

Formula (1)

wherein $R_1$, $R_2$, $R_3$, $R_4$, $R_5$, $R_6$, $R_7$ and $R_8$ are each independently hydrogen or C1-C10 linear or branched alkyl; preferably hydrogen or C1-C4 linear or branched alkyl; and more preferably hydrogen, methyl or ethyl.

**2.** The polymerizable phosphonic acid (salt) according to claim 1, wherein $R_1$, $R_2$, $R_3$, $R_4$, $R_5$, $R_6$, $R_7$ and $R_8$ are each independently hydrogen.

**3.** The polymerizable phosphonic acid (salt) according to claim 1 or 2, wherein a peak height ratio of a peak of $^1H$ NMR of the polymerizable phosphonic acid (salt) at the chemical shift $\delta$ of 1.019 to a peak of $^1H$ NMR of the polymerizable phosphonic acid (salt) at a chemical shift $\delta$ of 5.83 is less than 0.05.

**4.** The polymerizable phosphonic acid (salt) according to any one of claims 1-3, wherein the polymerizable phosphonic acid (salt) has a liquid chromatography purity of 97-99.9 wt%, preferably 98.5-99 wt%, and the liquid chromatography content of impurities is not more than 3 wt%.

**5.** The polymerizable phosphonic acid (salt) according to any one of claims 1-4, wherein an infrared spectrum of the polymerizable phosphonic acid (salt) is substantively free of a peak at 1606 $cm^{-1}$.

**6.** The polymerizable phosphonic acid (salt) according to any one of claims 1-5, wherein the cation of the polymerizable phosphonic acid (salt) is one or more of $Na^+$, $K^+$, $Li^+$, $Ca^{2+}$, $Mg^{2+}$, $Ba^{2+}$, $Cu^{2+}$, $Fe^{2+}$, $Fe^{3+}$, $Al^{3+}$, $Ti^{4+}$, and $Zr^{4+}$.

**7.** The polymerizable phosphonic acid (salt) according to any one of claims 1-6, wherein the polymerizable phosphonic acid (salt) is substantively free of peaks around a chemical shift $\delta$ of 4.63 ppm and a chemical shift $\delta$ of 4.25 ppm.

**8.** A method for preparing a polymerizable phosphonic acid, wherein the polymerizable phosphonic acid has a structure represented by a formula (2), and the method comprises reacting phosphorous acid sequentially with an amine represented by a formula (3) and an aldehyde in an organic solvent under reaction conditions,

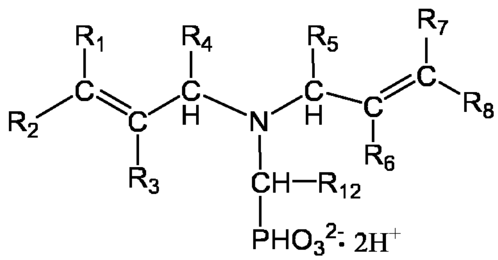
Formula (2),

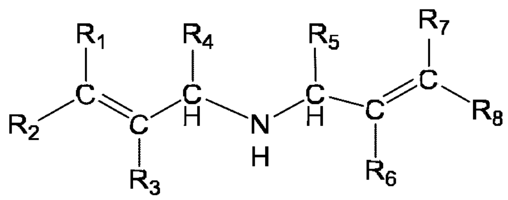
Formula (3),

wherein $R_1$, $R_2$, $R_3$, $R_4$, $R_5$, $R_6$, $R_7$ and $R_8$ are each independently hydrogen or C1-C10 linear or branched alkyl; preferably hydrogen or C1-C4 linear or branched alkyl; and more preferably hydrogen, methyl or ethyl.

**9.** The method according to claim 8, wherein the organic solvent is an alcohol having 1-12 carbon atoms, an ester having 2-12 carbon atoms, or an ether or ketone having 2-12 carbon atoms, and is further preferably one or more of methanol, ethanol, butanol, ethyl acetate, butyl acetate, isoamyl acetate, diethyl ether, butyl ether, acetone, and methyl ethyl ketone.

**10.** The method according to claim 8 or 9, wherein a volume ratio of the organic solvent to phosphorous acid is 1:1-15, preferably 1:0.5-8; and/or,
a molar ratio of the amine represented by the formula (3) to phosphorous acid to the aldehyde is 1:(1-2):(1-2), preferably 1:(1-1.5):(1-1.5).

**11.** The method according to any one of claims 8-10, wherein the reaction conditions comprise a pH of not more than 8 and a reaction temperature of -20°C to 10°C, preferably -10°C to 5°C.

**12.** The method according to claim 11, wherein phosphorous acid is reacted with the amine represented by the formula (3) at a pH of 1-6.8, preferably 1-4, even more preferably 1-3.

**13.** The method according to claim 12, wherein the method does not comprise adding water as a solvent.

**14.** The method according to any one of claims 8-13, wherein the aldehyde is one or more of formaldehyde, diformaldehyde, metaformaldehyde, and paraformaldehyde, preferably formaldehyde.

**15.** A method for preparing a polymerizable phosphonic acid salt, comprising preparing a polymerizable phosphonic acid by the method according to any one of claims 8-14 without separation and purification, and directly adding an alkaline substance for a neutralization reaction.

**16.** The method according to claim 15, wherein the alkaline substance is selected from one or more of sodium hydroxide, potassium hydroxide, sodium carbonate, sodium bicarbonate, potassium carbonate, potassium bicarbonate, magnesium hydroxide, magnesium carbonate, calcium carbonate, calcium hydroxide, iron hydroxide, copper hydroxide, titanium hydroxide, zirconium hydroxide and the like, preferably sodium hydroxide and/or potassium hydroxide.

**17.** The method according to claim 15 or 16, wherein the neutralization reaction is carried out at a temperature of 0-90°C, preferably 20-40°C; and the neutralization reaction is carried out for 0.5-6 h, preferably 1-3 h.

**18.** The method according to any one of claims 15-17, wherein the method further comprises subjecting a product obtained from the neutralization reaction to solid-liquid separation, and recycling the separated liquid phase.

**19.** A polymerizable phosphonic acid salt prepared by the method according to any one of claims 15-18.

**20.** Use of the polymerizable phosphonic acid (salt) according to any one of claims 1-7, the polymerizable phosphonic acid prepared by the method according to any one of claims 8-14 or the polymerizable phosphonic acid salt according to claim 19 in oilfield chemicals, water treatment, paper industry, fiber industry, coating industry, water absorbing materials, printing and dyeing auxiliaries, and biomedicine.

**21.** A phosphonate radical-containing copolymer, comprising a structural unit A and a structural unit B; wherein the structural unit A is from the polymerizable phosphonic acid salt according to any one of claims 1-7, and 19; the structural unit B is an acrylamide-based structural unit; a mass ratio of the structural unit A to the structural unit B is 1:3-3: 1; and the copolymer has a weight average molecular weight of $2.5\times10^5$-$1\times10^7$, preferably $1\times10^6$-$6\times10^6$.

**22.** The copolymer according to claim 21, wherein an anion of the structural unit A is a polymerizable phosphonic acid salt anion represented by a formula (I), a cation of the structural unit A is at least one of a monovalent metal cation, a divalent metal cation, a trivalent metal cation, and a tetravalent metal cation; and the structural unit B is an acrylamide-based structural unit represented by a formula (II),

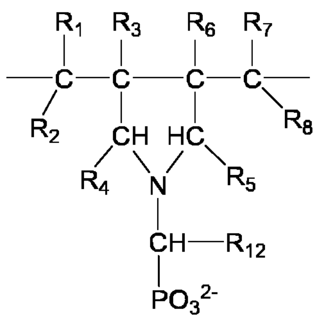

Formula (I),

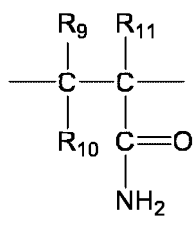

Formula (II),

wherein $R_1$, $R_2$, $R_3$, $R_4$, $R_5$, $R_6$, $R_7$, $R_8$, $R_9$, $R_{10}$ and $R_{11}$ are each independently hydrogen or C1-C10 linear or branched alkyl; preferably hydrogen or C1-C4 linear or branched alkyl; and more preferably hydrogen, methyl or ethyl.

**23.** A drilling fluid containing the copolymer according to claim 21 or 22, wherein preferably, the content of the copolymer is 0.5-5 wt% based on the total amount of the drilling fluid.

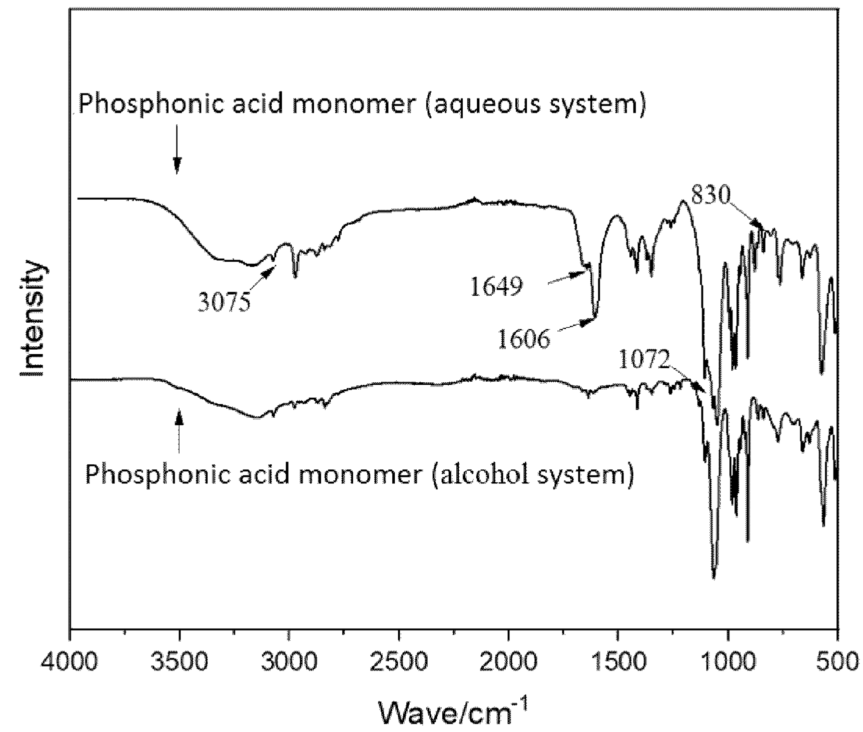
Phosphonic acid monomer (aqueous system)
830
3075
1649
1606
1072
Phosphonic acid monomer (alcohol system)
Intensity
4000 3500 3000 2500 2000 1500 1000 500
Wave/cm-1

FIG. 1

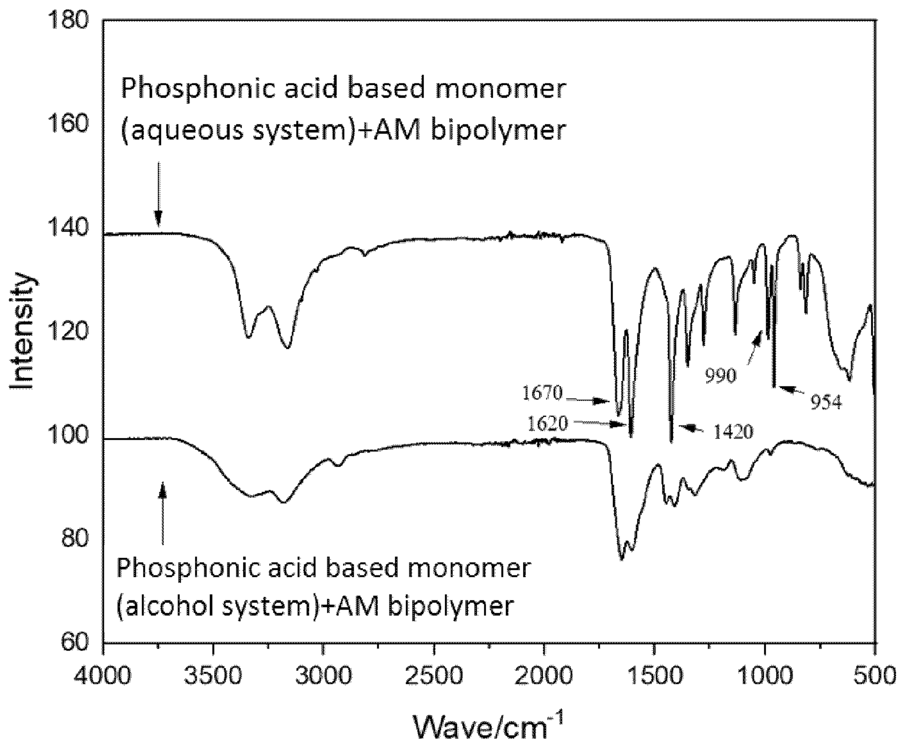
Phosphonic acid based monomer
(aqueous system)+AM bipolymer
180 160 140 120 100 80 60
Intensity
1670
1620
990
954
1420
Phosphonic acid based monomer
(alcohol system)+AM bipolymer
4000 3500 3000 2500 2000 1500 1000 500
Wave/cm-1

FIG. 2

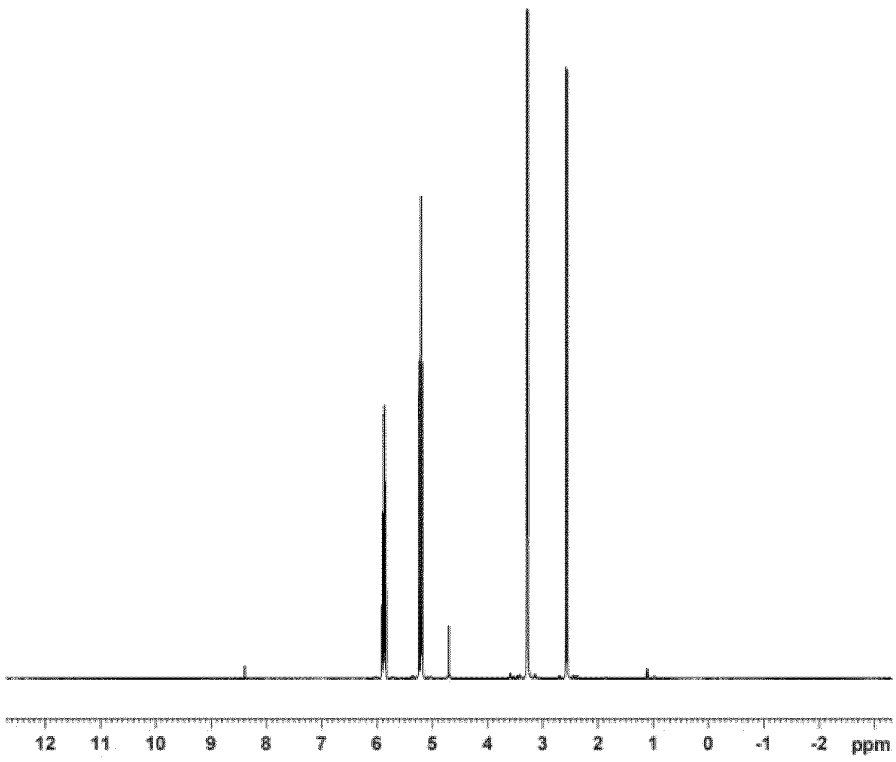


FIG. 3

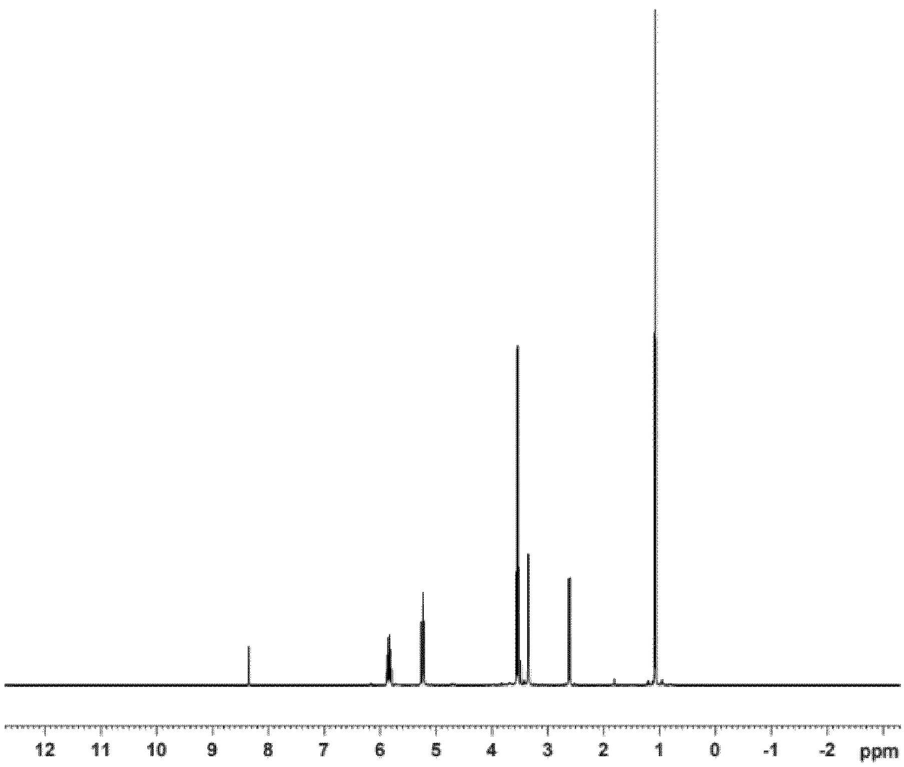


FIG. 4

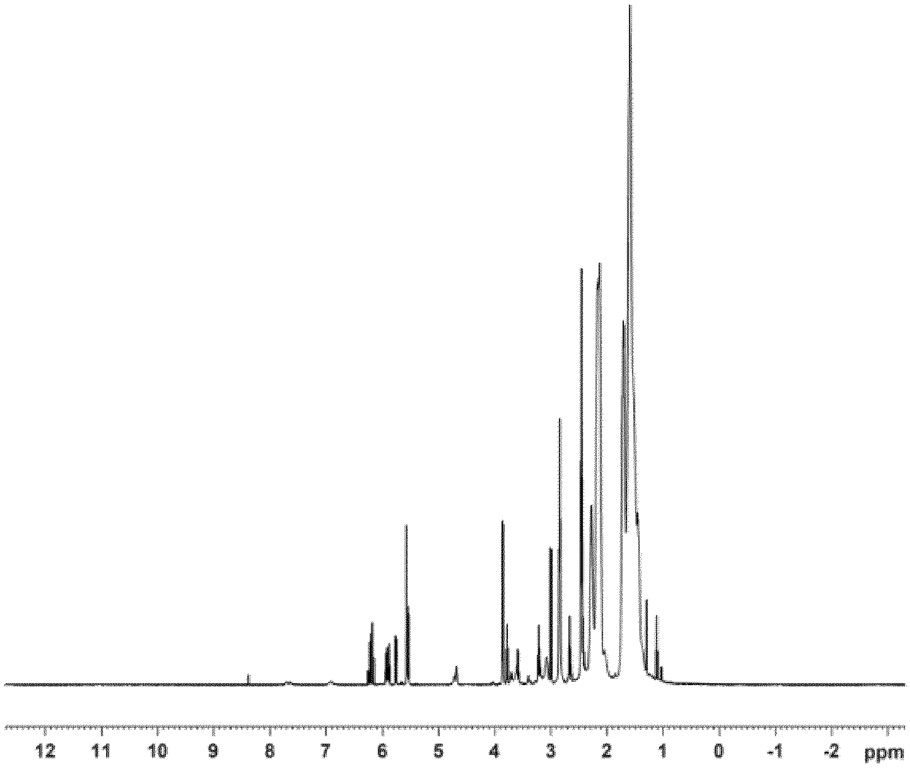


FIG. 5

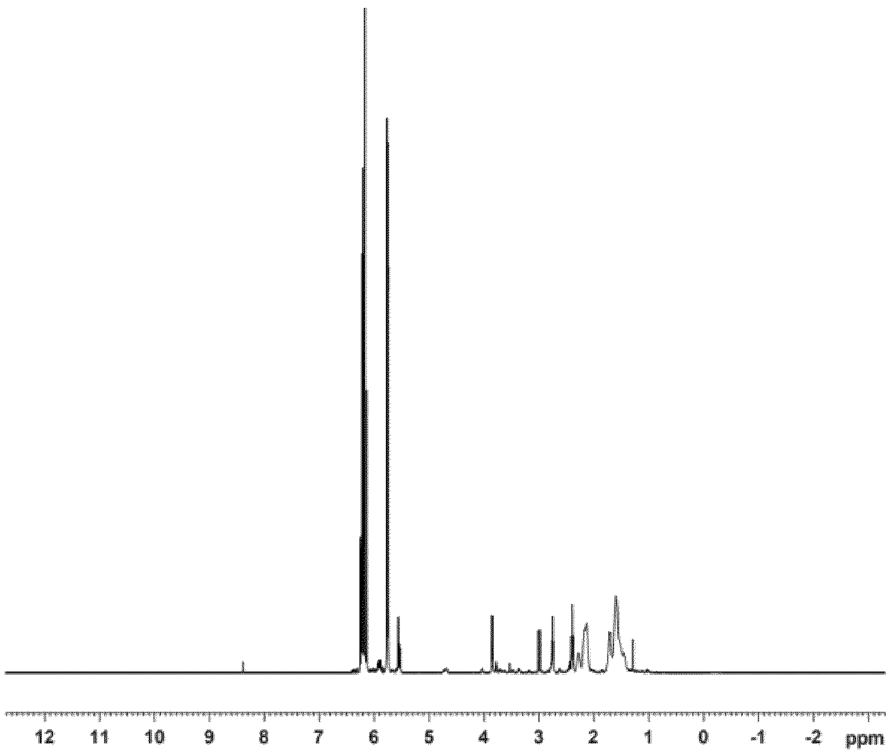


FIG. 6

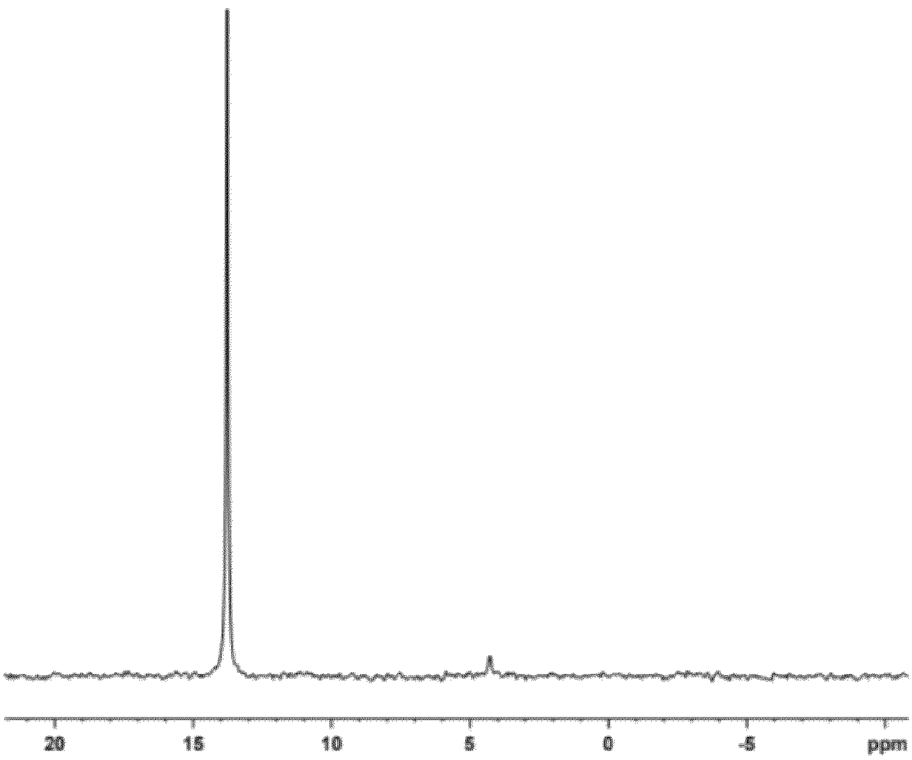


FIG. 7

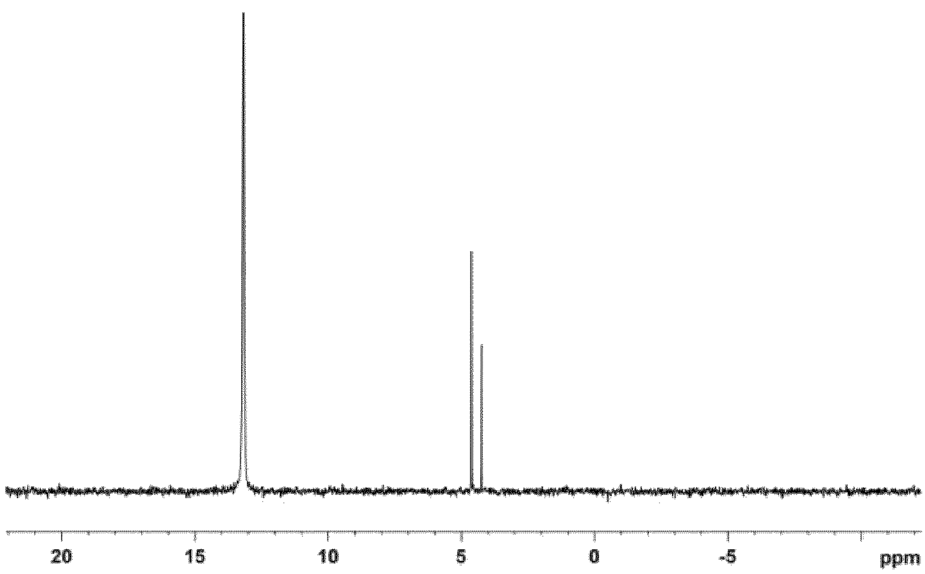


FIG. 8

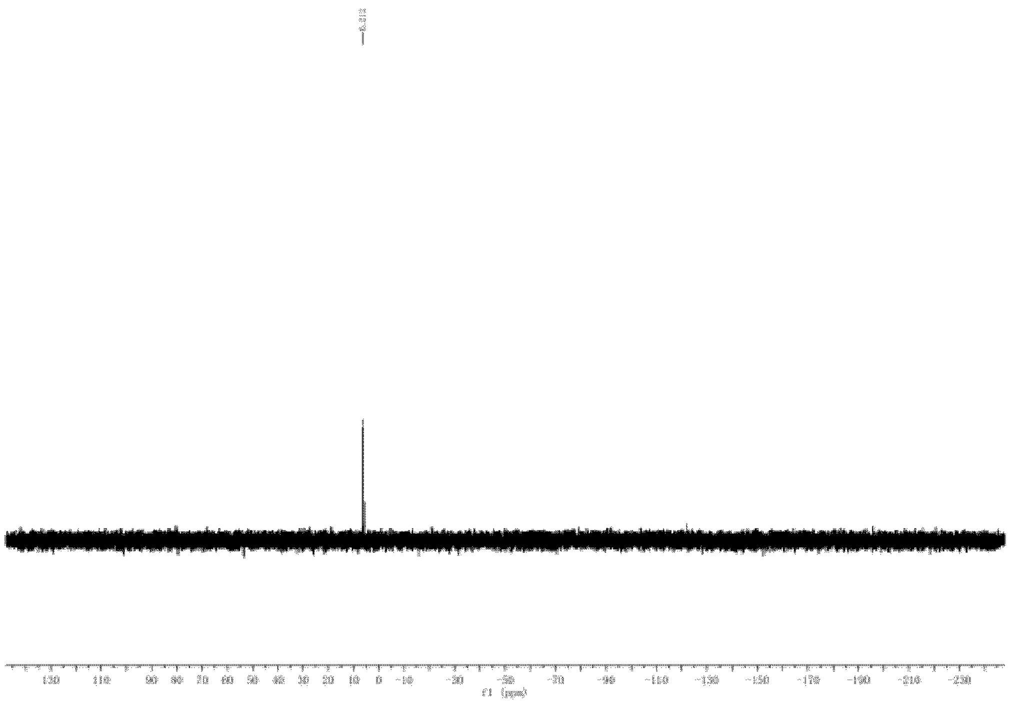
130 110 90 80 70 60 50 40 30 20 10 0 -10 -30 -50 -70 -90 -110 -130 -150 -170 -190 -210 -230
f1 (ppm)

FIG. 9

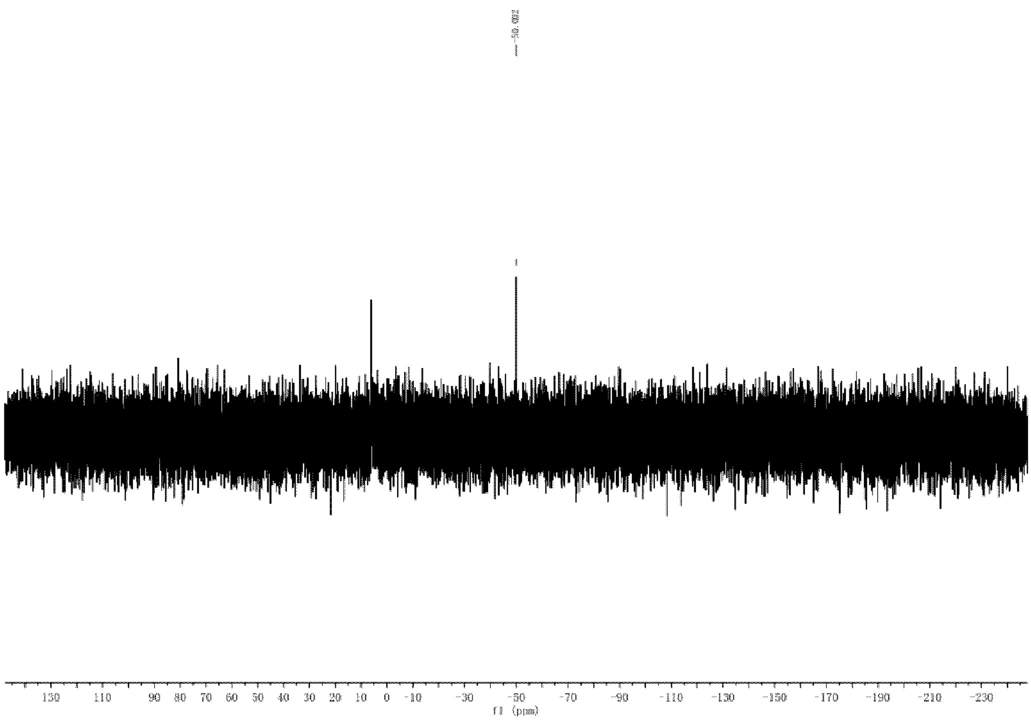
130 110 90 80 70 60 50 40 30 20 10 0 -10 -30 -50 -70 -90 -110 -130 -150 -170 -190 -210 -230
f1 (ppm)

FIG. 10

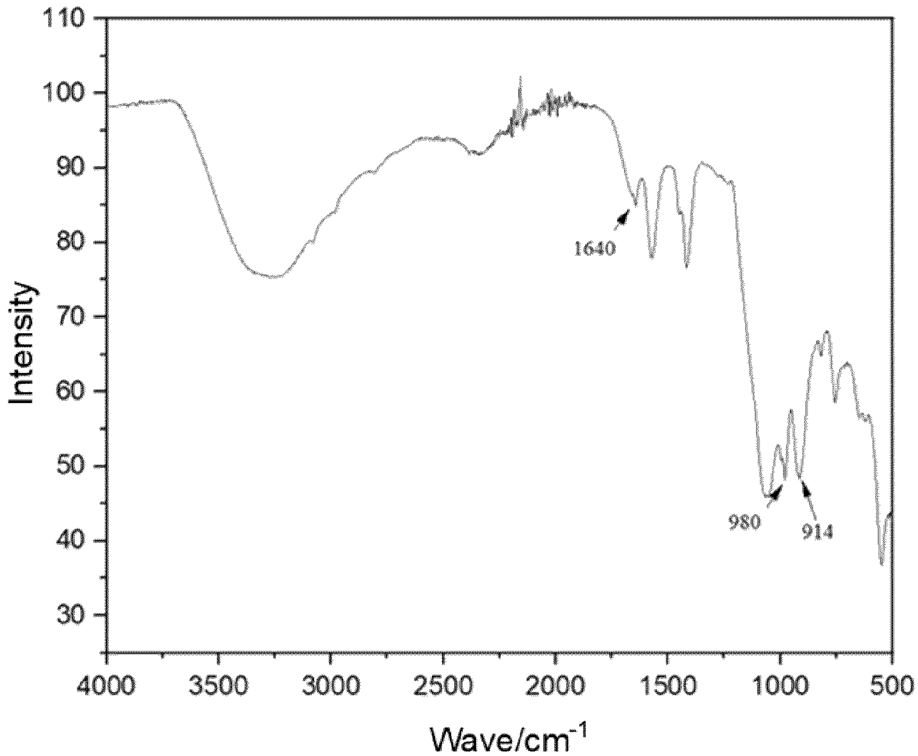
110
100
90
80
70
60
50
40
30
Intensity
4000
3500
3000
2500
2000
1500
1000
500
Wave/cm-1
1640
980
914

FIG. 11

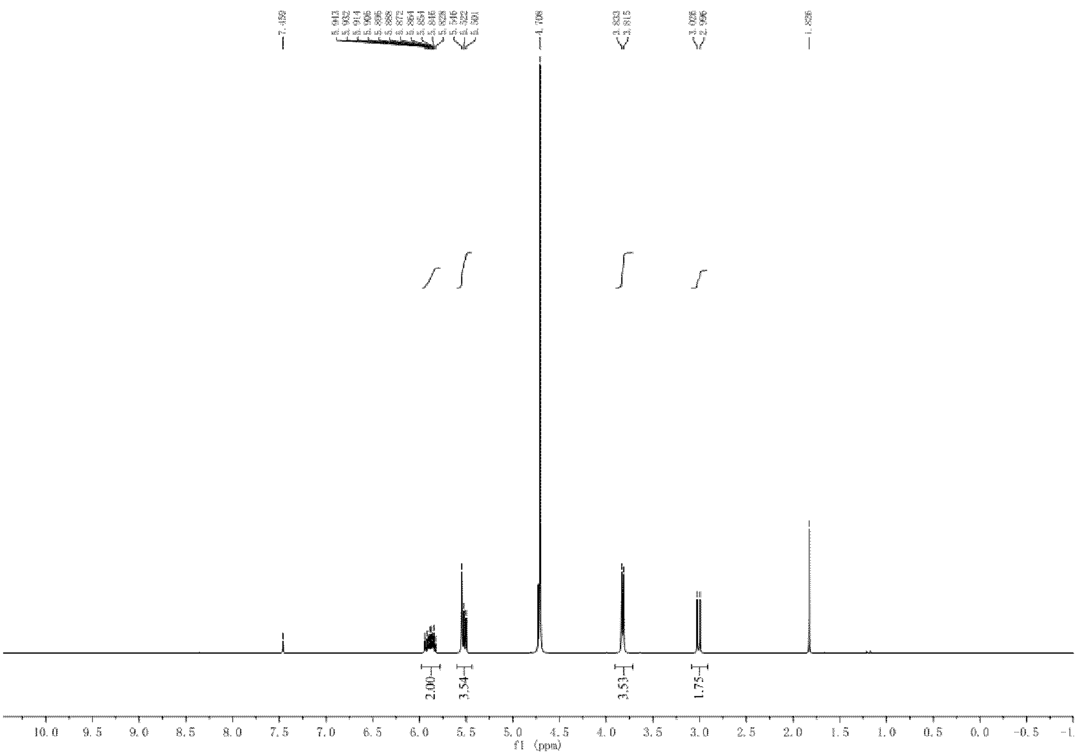
2.00
3.54
3.53
1.75
10.0
9.5
9.0
8.5
8.0
7.5
7.0
6.5
6.0
5.5
5.0
4.5
4.0
3.5
3.0
2.5
2.0
1.5
1.0
0.5
0.0
-0.5
f1 (ppm)

FIG. 12

**INTERNATIONAL SEARCH REPORT**

International application No.
**PCT/CN2022/127923**

**A. CLASSIFICATION OF SUBJECT MATTER**

C08F 230/02(2006.01)i; C08F 220/56(2006.01)i; C09K 8/035(2006.01)i

According to International Patent Classification (IPC) or to both national classification and IPC

**B. FIELDS SEARCHED**

Minimum documentation searched (classification system followed by classification symbols)

C08F; C09K

Documentation searched other than minimum documentation to the extent that such documents are included in the fields searched

Electronic data base consulted during the international search (name of data base and, where practicable, search terms used)

CNABS, VEN, CNTXT, ENTXT: 磷酸, 膦酸, 丙烯酰胺, 钻井液, phosphate, phosphonate, acrylamide, drilling fluid

**C. DOCUMENTS CONSIDERED TO BE RELEVANT**

| Category* | Citation of document, with indication, where appropriate, of the relevant passages | Relevant to claim No. |
|---|---|---|
| A | US 8614260 B1 (KING FAHD UNIVERSITY OF PETROLEUM AND MINERALS) 24 December 2013 (2013-12-24)<br>entire document | 1-23 |
| A | US 2014107236 A1 (KING FAHD UNIVERSITY OF PETROLEUM AND MINERALS) 17 April 2014 (2014-04-17)<br>entire document | 1-23 |
| A | JP 5072987 A (NITTO SPINNING KK) 16 June 1975 (1975-06-16)<br>entire document | 1-23 |
| A | CN 104312548 A (CHINA PETROCHEMICAL CORP. et al.) 28 January 2015 (2015-01-28)<br>entire document | 1-23 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/127923**

| Patent document cited in search report | | | Publication date (day/month/year) | Patent family member(s) | | | Publication date (day/month/year) |
|---|---|---|---|---|---|---|---|
| US | 8614260 | B1 | 24 December 2013 | None | | | |
| US | 2014107236 | A1 | 17 April 2014 | None | | | |
| JP | 5072987 | A | 16 June 1975 | JP | S5072987 | A | 16 June 1975 |
| CN | 104312548 | A | 28 January 2015 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111278542
- CN 202111278543
- CN 202111278544
- CN 108753267 A
- CN 104388061 A
- GB 1678322012 T